# EUROPEAN PATENT SPECIFICATION

(11) **EP 3 468 940 B1**
(45) Date of publication and mention of the grant of the patent: **26.07.2023**
(21) Application number: 17737936.9
(22) Date of filing: 13.06.2017
(51) Int. Cl.: C04B 111/00, B01D 46/24, C04B 35/195, C04B 35/478, C04B 38/00

(54) **ALUMINUM TITANATE COMPOSITIONS AND METHODS OF MAKING ALUMINUM TITANATE ARTICLES**
ALUMINIUMTITANATZUSAMMENSETZUNGEN UND VERFAHREN ZUR HERSTELLUNG VON ALUMINIUMTITANATARTIKELN
COMPOSITIONS DE TITANATE D'ALUMINIUM ET PROCÉDÉS DE FABRICATION D'ARTICLES EN TITANATE D'ALUMINIUM

(30) Priority: 13.06.2016 US 201662349249 P
(43) Date of publication of application: 17.04.2019
(73) Proprietor: Corning Incorporated, Corning, New York 14831 (US)
(72) Inventor: BACKHAUS-RICOULT, Monika, 77780 Bourron (FR); TEPESCH, Patrick David, Corning New York 14830 (US); VILENO, Elizabeth Marie, Corning New York 14830 (US)
(74) Representative: Sturm, Christoph
(86) International application number: PCT/US2017/037163
(87) International publication number: WO 2017/218478

(56) References cited:
- WO-A1-2012/176888
- WO-A1-2014/028207
- WO-A2-2008/005249
- US-A1- 2006 021 308
- US-A1- 2007 119 135
- US-A1- 2007 259 769
- US-A1- 2012 217 669
- US-A1- 2016 068 441

## Description

### RELATED APPLICATIONS

This application claims the benefit of priority to U.S. Provisional Application Number 62/349,249, filed June 13, 2016.

### FIELD

Exemplary embodiments of the present disclosure relate to ceramic compositions, ceramic articles and methods of manufacturing the same and, more particularly, to a ceramic composition comprising an inorganic batch composition comprising a magnesia source, a silica source, an alumina source, a titania source, and at least one rare earth oxide; a ceramic article comprising a first crystalline phase comprised predominantly of a solid solution of aluminum titanate and magnesium dititanate, a second crystalline phase comprising cordierite, a third crystalline phase comprising mullite, and a rare earth oxide; and a method of making same.

### BACKGROUND

Exhaust gas can be cleaned by after-treatment of noxious gases using catalysts supported on high-surface area substrates. In addition, exhaust systems can remove ash and soot through the use of filters. The soot can be removed through capture and catalyzed burning of carbon soot particles. In some cases, these operations can be performed all within the same filter, which also acts as a catalyst support. These filters can be refractory, thermal shock resistant, stable under a range of pO₂ conditions, non-reactive with the catalyst system, and have low pressure drop to minimize the fuel efficiency penalty.

The above information disclosed in this Background section is only for enhancement of understanding of the background of the disclosure and therefore it may contain information that does not form any part of the prior art nor what the prior art may suggest to a person of ordinary skill in the art.

US 2006/021308 A1 relates to a mullite-aluminum titanate ceramic body that has improved properties for use in high temperature applications and a method for making the same.

US 2007/259769 A1, US 2007/119135 A1, US 2016/068441 A1, WO 2014/028207 A1, US 2012/217669 A1, and WO 2008/005249 A2 show additional prior art.

WO 2012/176888 A1 show additional prior art.

### SUMMARY

The invention provides a method of manufacturing a ceramic article according to claim 1. The method comprises mixing at least a magnesia source, a silica source, an alumina source, a titania source, and a rare earth oxide to form an inorganic batch composition; mixing the inorganic batch composition together with one or more processing aids selected from the group consisting of a plasticizer, lubricant, binder, pore former, and solvent, to form a plasticized ceramic precursor batch composition; shaping the plasticized ceramic precursor batch composition into a green body; and firing the green body under conditions effective to convert the green body into a ceramic article comprising a pseudobrookite phase comprising predominately alumina, magnesia, and titania, a second phase comprising cordierite, and a third phase comprising mullite, wherein the rare earth oxide comprises at least one of a lanthanide oxide and yttrium oxide, and wherein the rare earth oxide comprises a particle size distribution where 90% of the particles in the particle size distribution comprise a size less than or equal to 5 µm (D₉₀ ≤ 5 µm) and a median particle size of less than or equal to 0.7 µm (D₅₀ ≤0.7 µm).

The disclosure provides a method of controlling a shrinkage or growth of ceramic articles. The method comprising: mixing at least a magnesia source, a silica source, an alumina source, a titania source, and a rare earth oxide to form an inorganic batch composition, wherein the rare earth oxide comprises a particle size distribution wherein 90% of the particles in the particle size distribution comprise a size less than or equal to 5 µm (D₉₀ ≤5 µm) and a median particle size of less than or equal to 1.0 µm (D₅₀ ≤ 1 µm); mixing the inorganic batch composition together with one or more processing aids selected from the group consisting of a plasticizer, lubricant, binder, pore former, and solvent, to form a plasticized ceramic precursor batch composition; shaping the plasticized ceramic precursor batch composition into a plurality of green bodies; and firing the green bodies in a kiln at a top soak temperature effective to convert the green bodies into ceramic articles each comprising a pseudobrookite phase comprising predominately alumina, magnesia, and titania, a second phase comprising cordierite, and a third phase comprising mullite to form the ceramic articles, wherein a dry green to fired shrinkage range of the ceramic articles is 0.5% or less, the shrinkage range being a maximum difference in shrinkage between the ceramic articles, and wherein the kiln temperature differential is up to 10°C.

The invention provides a ceramic precursor batch composition according to claim 12 comprising an inorganic batch composition comprising a magnesia source, a silica source, an alumina source, a titania source, and a rare earth oxide, wherein the rare earth oxide comprises a particle size distribution D₉₀ of less than 5 µm and a median particle size D₅₀ of less than 0.7 µm.

The disclosure provides a composition expressed on an oxide basis of: a(Al₂TiO₅) + b(MgTi₂O₅) + c(2MgO · 2Al₂O₃ · 5SiO₂) + d(3Al₂O₃ · 2SiO₂) + e(MgO · Al₂O₃) + f(2MgO·TiO₂) + g(X) + i(Fe₂O₃ · TiO₂) + j(TiO₂) + k(Al₂O₃) + m(SiO₂) + n(MgO), wherein a, b, c, d, e, f, g, i, j, k, m, and n are weight fractions of each component such that (a + b + c + d + e + f + g + i + j + k +m + n) = 1.00, wherein 0.3 ≤ a ≤ 0.88, 0.03 ≤ b ≤ 0.3, 0.02 ≤ c ≤ 0.5, and 0.001 ≤ g ≤ 0.05, wherein X is a rare earth oxide, and wherein the rare earth oxide comprises a particle size distribution D₉₀ of less than 5 µm and a median particle size D₅₀ of 0.4 µm.

It is to be understood that both the foregoing general description and the following detailed description are exemplary and explanatory and are intended to provide further explanation of the disclosure.

### Brief Description of the Figures

The accompanying drawings, which are included to provide a further understanding of the disclosure and are incorporated in and constitute a part of this specification, illustrate exemplary embodiments of the disclosure, and together with the description serve to explain the principles of the disclosure.

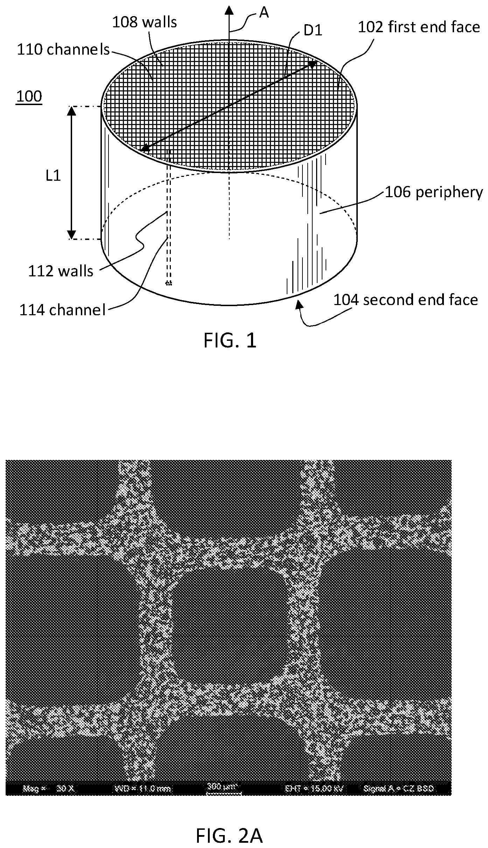

**FIG. 1** illustrates a schematic honeycomb body according to exemplary embodiments of the disclosure.

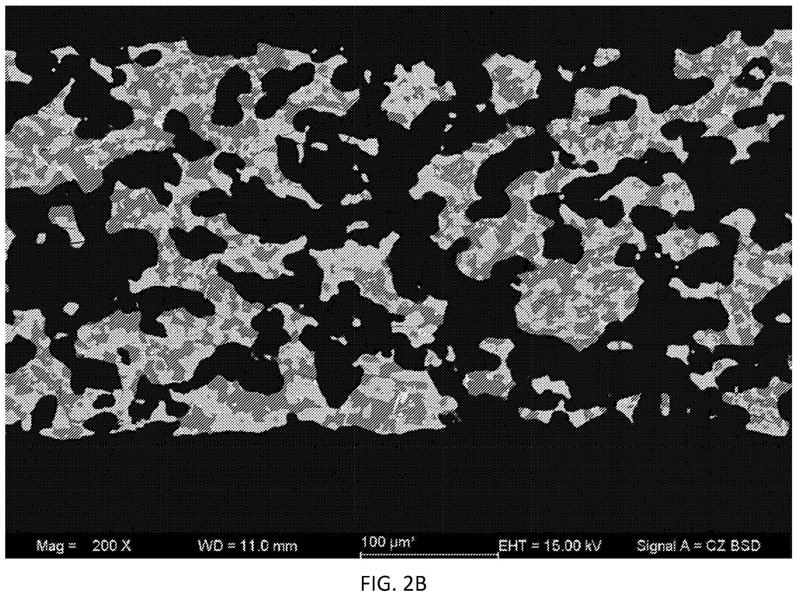

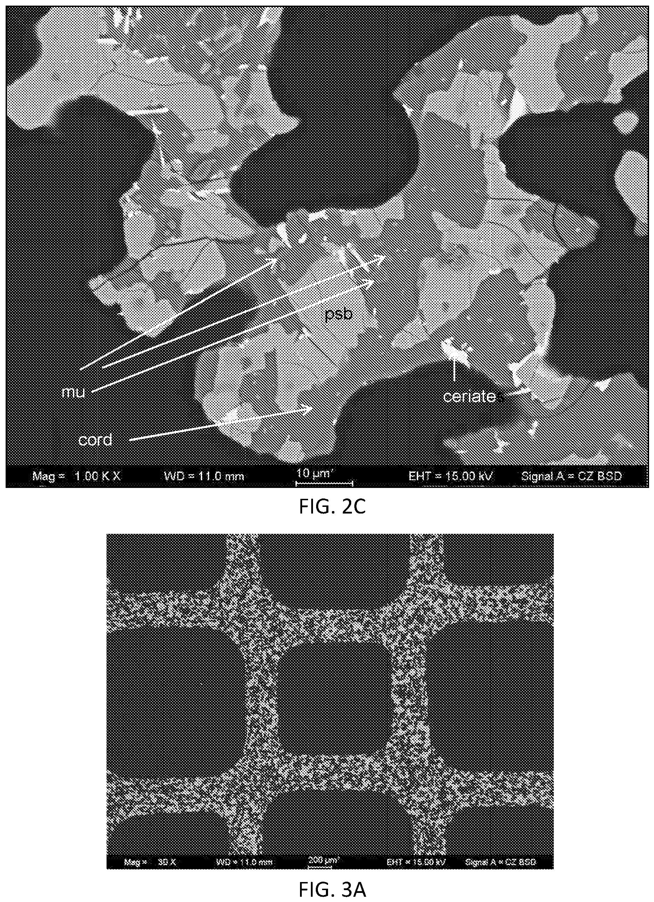

**FIG. 2A** is a scanning electron micrograph (SEM) image of a cross section through cell walls of a comparative honeycomb body comprised of approximately 10 to 25 wt% cordierite, approximately 5 to 30 wt% mullite, approximately 50 to 70 wt% of a pseudobrookite phase consisting predominantly of an Al₂TiO₅-MgTi₂O₅ solid solution, and approximately 1.5 wt% of CeO₂ addition. **FIGS. 2B** **and** **2C** are enlarged views through the cell wall and at the cell wall edge, respectively, of **FIG. 2A****.**

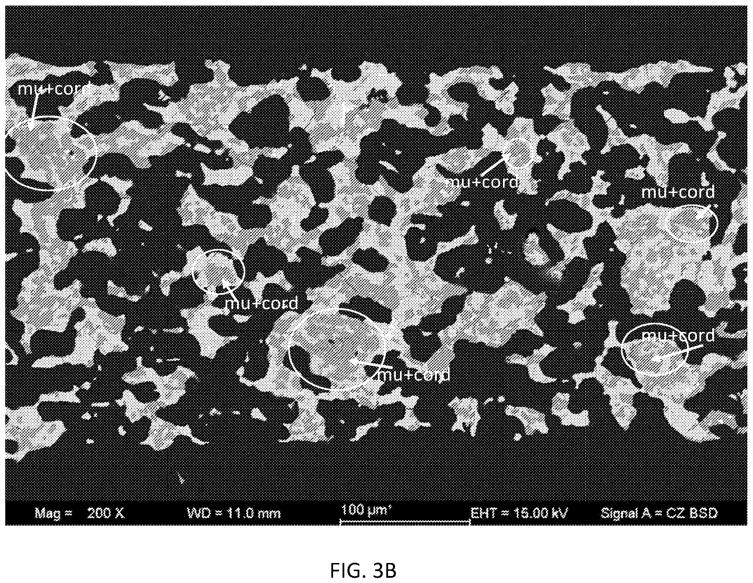

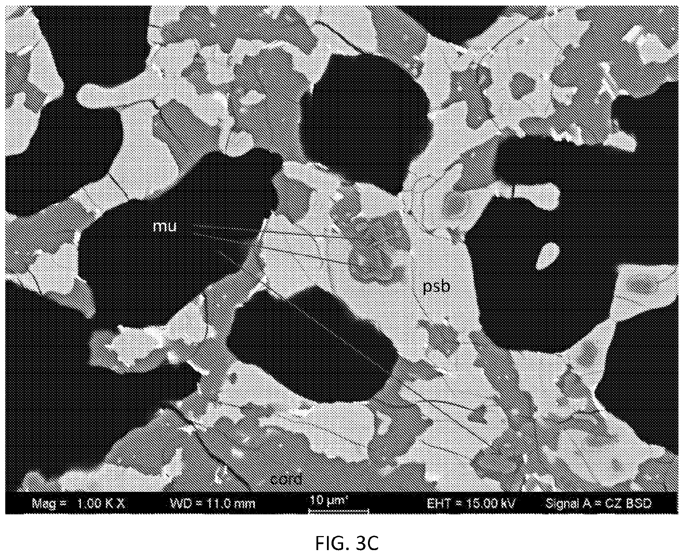

**FIG. 3A** is a scanning electron micrograph (SEM) image of a cross section through cell walls of an exemplary honeycomb body according to embodiments of the disclosure comprised of approximately 10 to 25 wt% cordierite, approximately 5 to 30 wt% mullite, approximately 50 to 70 wt% of a pseudobrookite phase consisting predominantly of an Al₂TiO₅-MgTi₂O₅ solid solution, and approximately 1.0 wt% of CeO₂ addition. **FIGS. 3B** **and** **3C** are enlarged views through the cell wall and at the cell wall edge, respectively, of **FIG. 3A****.**

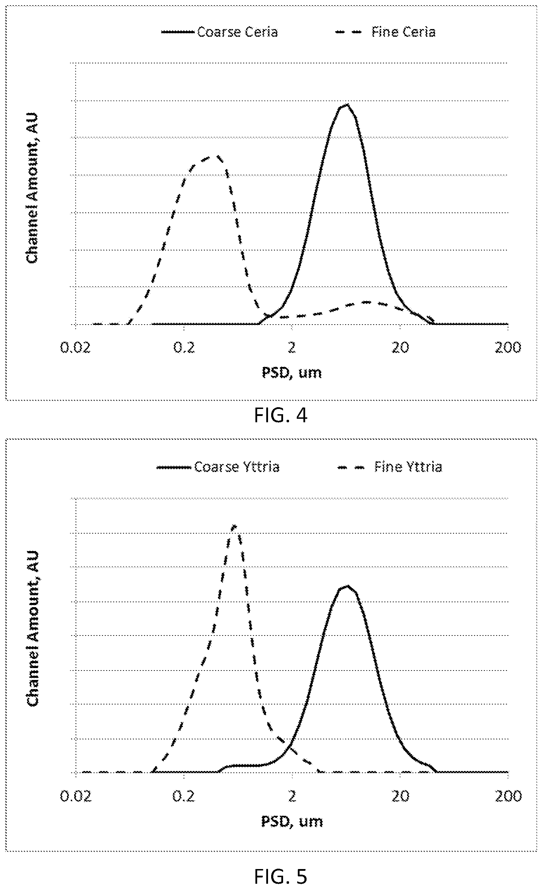

**FIG. 4** is a graph showing measurement data for particle size distributions of cerium oxide. The solid line represents the particle size distribution curve of as received cerium oxide (coarse) and the dashed line represents the particle size distribution curve of cerium oxide after milling (fine).
**FIG. 5** is a graph showing measurement data for the particle size distributions of yttrium oxide. The solid line represents the particle size distribution curve of as received yttrium oxide (coarse) and the dashed line represents the particle size distribution curve of yttrium oxide after milling (fine).

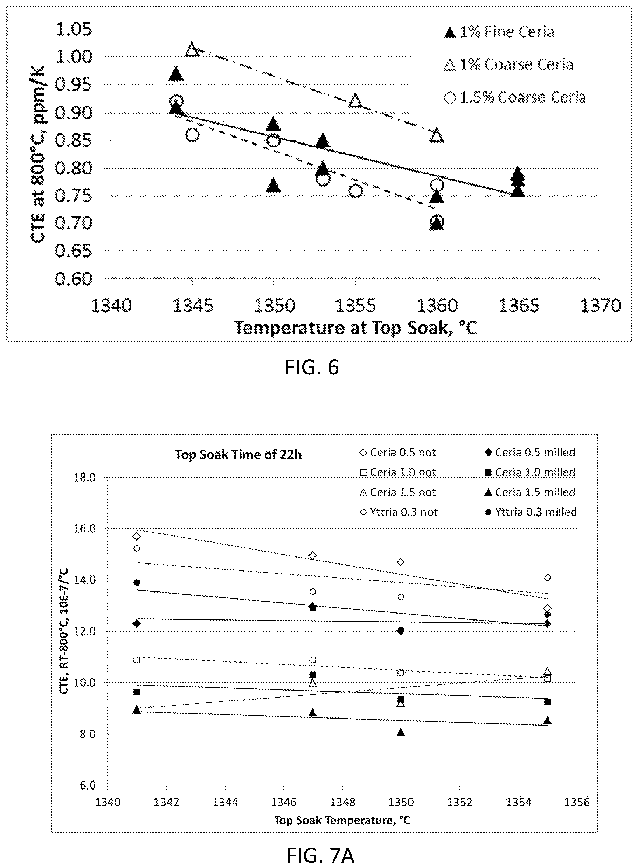

**FIG. 6** is a graph showing measurement data for coefficient of thermal expansion (CTE) from Room Temperature (RT) of about 24°C to about 800°C in ppm/K (RT to 800°C) vs. temperature at top soak (T_{ATS}) (°C) for manufactured articles containing 1.5 wt% coarse ceria (cerium oxide) and 1 wt% fine ceria (cerium oxide) according to exemplary embodiments of the disclosure.
**FIG. 7A** is a graph showing measurement data for mean CTE (RT to 800°C) in 10⁻⁷/°C vs. temperature at top soak (T_{ATS}) (°C) for 22 h at the T_{ATS} for manufactured articles containing various amounts of milled rare earth oxide ("milled"), having a median particle size of about 0.4 µm (referred to herein as "fine") according to exemplary embodiments of the disclosure, and unmilled rare earth oxide ("not"), having a median particle size of about 7-20 µm (referred to herein as "coarse") ceria or yttria (yttrium oxide) according to comparative examples.

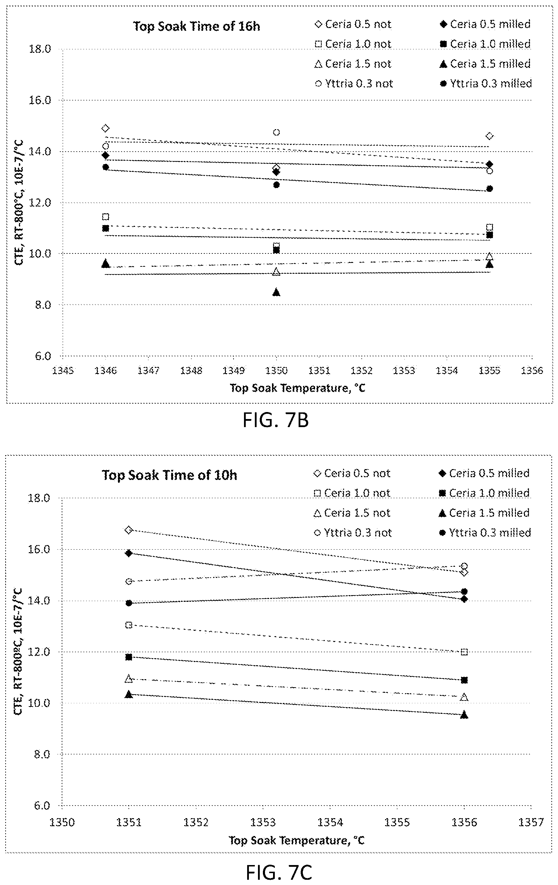

**FIG. 7B** is a graph showing measurement data for mean CTE (RT to 800°C) in 10⁻⁷/°C vs. temperature at top soak (T_{ATS}) (°C) for 16 h at the T_{ATS} for manufactured articles containing various amounts of milled rare earth oxide ("milled"), having a median particle size of about 0.4 µm according to exemplary embodiments of the disclosure, and unmilled rare earth oxide ("not"), having a median particle size of about 7-20 µm ceria or yttria according to comparative examples.
**FIG. 7C** is a graph showing measurement data for mean CTE (RT to 800°C) in 10⁻⁷/°C vs. temperature at top soak (T_{ATS}) (°C) for 10 h at the T_{ATS} for manufactured articles containing various amounts of milled rare earth oxide ("milled"), having a median particle size of about 0.4 µm according to exemplary embodiments of the disclosure, and unmilled rare earth oxide ("not"), having a median particle size of about 7-20 µm ceria or yttria according to comparative examples.

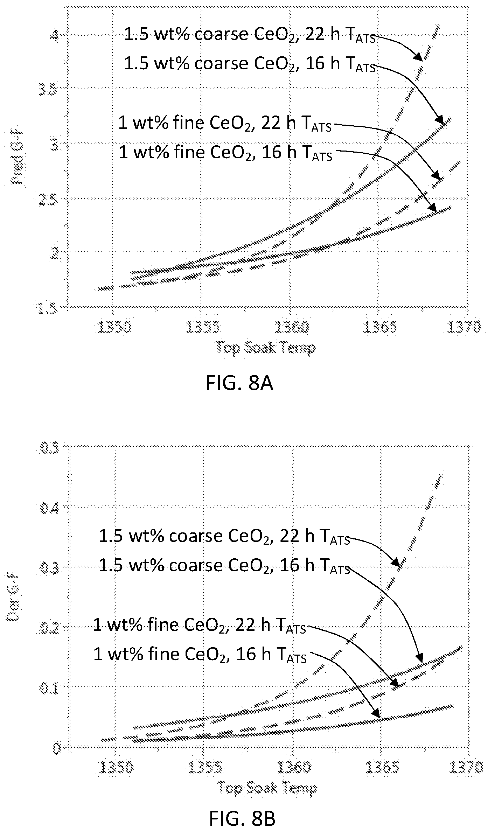

**FIG. 8A** is a graph fit to experimental data showing dry green to firing shrinkage (Pred G-F) with respect to T_{ATS} for manufactured articles containing 1 wt% fine ceria (solid and dashed lower curves) with time at T_{ATS} of 22 hours (h) (dashed line) or 16 h (solid line) according to exemplary embodiments of the disclosure, and manufactured articles containing 1.5 wt% coarse ceria (solid and dashed upper curves) with time at T_{ATS} of 22 h (dashed line) or 16 h (solid line) according to comparative examples.
**FIG. 8B** is a graph of the derivatives of the shrink curves (Der G-F) of **FIG. 8A****,** which shows how sensitive the materials are with respect to top soak temperature (T_{ATS}).

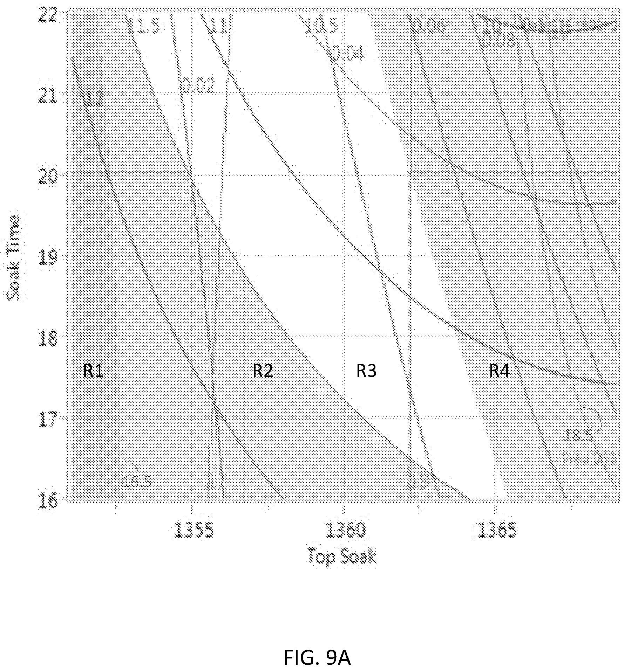

**FIG. 9A** is a chart showing properties and sensitivities to soak time (h) and T_{ATS} for manufactured articles containing 1 wt% fine ceria according to exemplary embodiments of the disclosure where R1 represents a region of the median pore size limit (>16.5 µm), R2 represents a region of limits for CTE (<11.5× 10⁻⁷ /°C from RT to 800°C), R3 represents a region of the firing window, and R4 represents a region of the limit for the firing shrink sensitivity (max=0.05%/°C).

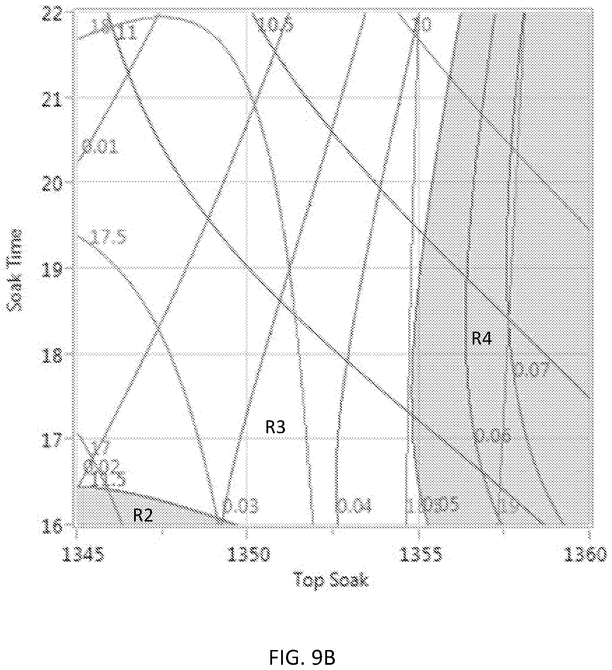

**FIG. 9B** is a chart showing properties and sensitivities to soak time (h) and T_{ATS} for manufactured articles containing 1.5 wt% coarse ceria according to comparative examples. R1 represents a region of the median pore size limit (>16.5 µm), R2 represents a region of limits for CTE (<11.5 × 10⁻⁷ /°C from RT to 800°C), R3 represents a region of the firing window, and R4 represents a region of the limit for the firing shrink sensitivity (max=0.05%/°C).

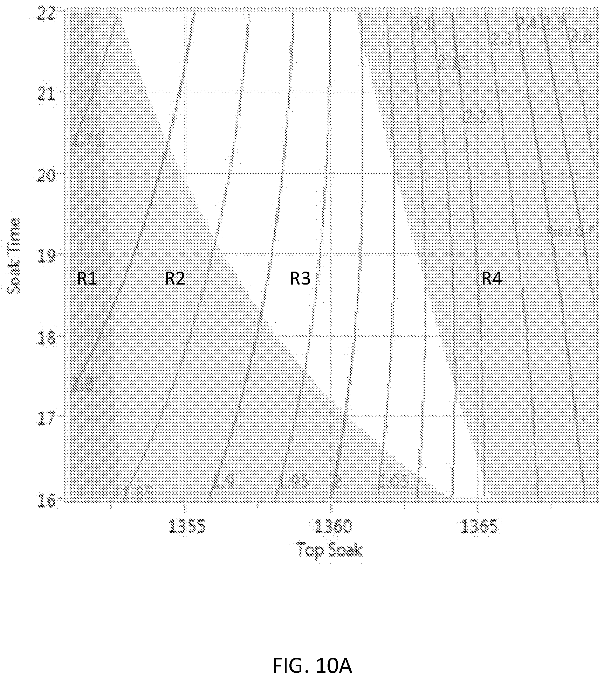

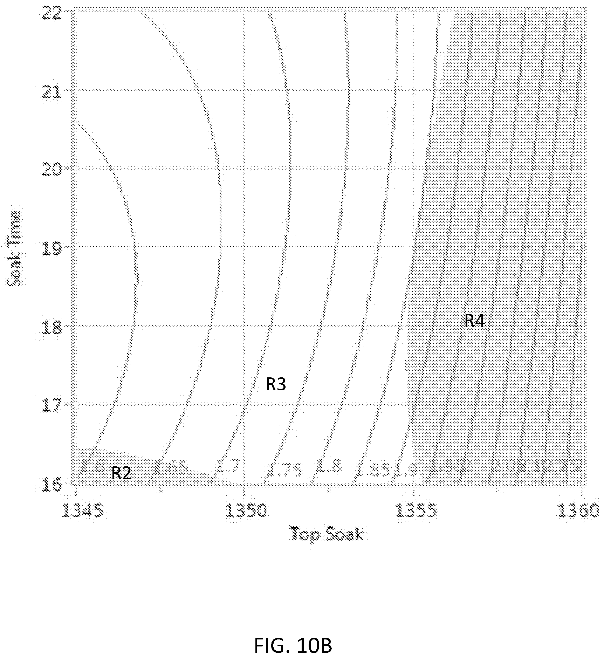

**FIG. 10A** is the chart of **FIG. 9A****,** but with contour lines for shrink, and **FIG. 10B** is the chart of **FIG. 9B****,** but with contour lines for shrink.

### DETAILED DESCRIPTION

As described herein, it will be understood that oxides ending in "a" are synonyms for oxides ending in "ium," for example, "yttria" is a synonym for "yttrium oxide", as is Y₂O₃, yttrium(III) oxide, etc. and "ceria" is a synonym for "cerium oxide", also known as ceric oxide, cerium dioxide, CeO₂, cerium(IV) oxide, etc. It will also be understood that lanthanide oxide includes oxides of the lanthanide series, including, for example, cerium oxide, lanthanum oxide, etc. It will also be understood that for the purposes of this disclosure, "at least one of X, Y, and Z" can be construed as X only, Y only, Z only, or any combination of two or more items X, Y, and Z (e.g., XYZ, XY, XZ, YZ, XXY).

Herein, a range encompasses given endpoints of the range and all values between the endpoints. It will be further understood that the endpoints of each of the ranges are significant both in relation to the other endpoint, and independently of the other endpoint. When a measurement is described as being "about" a particular value or a particular range of values, the measurement is intended to encompass machining tolerances, general measurement margins of error, and/or equivalents thereto. "About" modifying, for example, the quantity of an ingredient in a composition, concentrations, volumes, process temperature, process time, yields, flow rates, pressures, viscosities, and like values, and ranges thereof, employed in describing the embodiments of the disclosure, refers to variation in the numerical quantity that can occur, for example: through typical measuring and handling procedures used for preparing materials, compositions, composites, concentrates, or use formulations; through inadvertent error in these procedures; through differences in the manufacture, source, or purity of starting materials or ingredients used to carry out the methods; and like considerations. The term "about" also encompasses amounts that differ due to aging of a composition or formulation with a particular initial concentration or mixture, and amounts that differ due to mixing or processing a composition or formulation with a particular initial concentration or mixture.

Unless otherwise expressly stated, it is in no way intended that any method set forth herein be construed as requiring that its steps be performed in a specific order. Accordingly, where a method claim does not expressly recite an order to be followed by its steps or it is not otherwise specifically stated in the claims or descriptions that the steps are to be limited to a specific order, it is no way intended that any particular order be inferred. While various features, elements or steps of particular embodiments may be disclosed using the transitional phrase "comprising," it is to be understood that alternative embodiments, including those that may be described using the transitional phrases "consisting" or "consisting essentially of," are implied. Thus, for example, implied alternative embodiments to a structure that comprises A+B+C include embodiments where a structure consists of A+B+C and embodiments where a structure consists essentially of A+B+C.

**FIG. 1** illustrates a schematic honeycomb body 100 according to exemplary embodiments of the disclosure. The honeycomb body 100 has a length L1, volume V1, and includes a first end face 102 and a second end face 104 having an outer peripheral surface 106 extending from the first end face 102 to the second end face 104. A plurality of intersecting walls 108 that form mutually adjoining channels or cells 110 extending in the axial direction "A" between opposing end faces 102, 104, according to exemplary embodiments of the disclosure, form a honeycomb matrix. Intersecting walls 112 forming a channel 114 extending between the end faces 102, 104 are shown for illustration. The axial direction is indicated by arrow "A" and a maximum cross sectional dimension perpendicular to the axial direction is indicated by "D1". For example, when the honeycomb body 100 is a cylinder shape, the maximum dimension "D1" may be a diameter of an end face. For example, when the honeycomb body cross section perpendicular to the axial direction is a rectangular shape, the maximum dimension "D1" may be a diagonal of an end face. The top face 102 refers to the first end face 102 and the bottom face 104 refers to the second end face 104 of the honeycomb body 100 positioned in **FIG. 1****,** otherwise the end faces are not limited by the orientation of the honeycomb body 100. The top face 102 may be an inlet face and the bottom face 104 may be an outlet face of the honeycomb body 100. The outer peripheral surface 106 of the honeycomb body 100 extends axially from the first end face 102 to the second end face 104.

Cell 110 density of the honeycomb body 100 can be between about 10 and 190 cells per square cm (between about 70 and 1200 cells per square inch (cpsi)). Typical cell wall thicknesses can range from about 0.025 mm to about 1.5 mm (about 1 to 60 mil). For example, honeycomb body 100 geometries may be 400 cpsi with a wall thickness of about 8 mil (400/8) or with a wall thickness of about 6 mil (400/6). Other geometries include, for example, 100/17, 200/12, 200/19, 270/19, 280/11, 300/7, 300/13, 350/12, 350/14, 400/4, and 600/4. As used herein, honeycomb body 100 is intended to include a generally honeycomb structure but is not strictly limited to a square structure. For example, hexagonal, octagonal, triangular, rectangular or any other suitable cell shape may be used.

As a further, the honeycomb body 100 can include first and second channels, where first channels have a first hydraulic diameter Dh1, and second channels have a second hydraulic diameter Dh2. In one embodiment, the ratio of Dh1 and Dh2 is between 1.1 and 1.6. However, in another embodiment the ratio of Dh1 and Dh2 may include 1.0. Each of the first channels can be bordered by second channels and vice versa, or other arrangements of the first channels and second channels can be provided. In some embodiments, corners of the channels may be provided with fillets or bevels. In one embodiment, the dimension of the fillets or bevels may be selected such that hydraulic diameter of the larger cells is maximized for a selected cell density and closed frontal area. Also, while the cross section of the cellular honeycomb body 100 is circular, it is not so limited, for example, the cross section can be elliptical, square, rectangular, or other desired shape, and a combination thereof.

For ease of description, the exemplary embodiments refer to honeycomb body, but the disclosure is not so limited, for example, trough filters and radial flow filters are also included in this disclosure.

The manufacture of porous ceramic honeycomb bodies may be accomplished by the process of plasticizing ceramic powder batch mixtures, extruding the mixtures through honeycomb extrusion dies to form honeycomb extrudate, and cutting, drying, and firing the extrudate to produce ceramic honeycomb bodies of high strength and thermal durability having channels extending axially from a first end face to a second end face. Drying by microwave radiation, hot air, or the like results in a dry green body or dry green ware when the water is reduced to as low as practical, such as less than 2 wt% of the dry green ware. In this sense, ceramic powder batch mixtures, ceramic pre-cursor batches, or ceramic batch compositions may comprise inorganic oxides or oxide precursors that when reacted form a ceramic, as well as ceramics that remain unreacted or react to form another ceramic in whole or in part.

Upon exiting the extruder in an axial direction, the batch stiffens into a wet extrudate comprising a network of axially extending intersecting walls (webs) that form axially extending channels and an axially extending outer peripheral surface. The webs and channels comprise the matrix. Disposed at the outer periphery of the matrix is the outer peripheral surface. The outer peripheral surface may be referred to herein as a co-extruded skin, an integrally formed co-extruded skin, or skin. A green ware honeycomb body or porous ceramic honeycomb body extruded with the skin on the matrix is referred to herein as an extrude-to-shape honeycomb body. As used herein a ceramic honeycomb body includes ceramic honeycomb monoliths and ceramic segmented honeycomb bodies.

A co-extruded or an after-applied exterior skin may form an outer peripheral surface extending axially from a first end face to a second end face of the ceramic honeycomb body. Each channel of the honeycomb body defined by intersecting walls (webs), whether monolithic or segmented, can be plugged at an inlet face or an outlet face to produce a filter. When some channels are left unplugged a partial filter can be produced. The honeycomb body, whether monolithic or segmented, can be catalyzed to produce a substrate. A non-plugged honeycomb body is generally referred to herein as a substrate. The catalyzed substrate can have an after applied catalyst or comprise an extruded catalyst. Further, filters and partial filters can be catalyzed to provide multi-functionality. The ceramic honeycomb bodies thus produced are widely used as catalyst supports, membrane supports, wall-flow filters, partial filters, and combinations thereof for cleaning fluids such as purifying engine exhausts.

Recently, new catalysts with improved performance have come on the market and have been found to exhibit undesirable chemical interactions with some existing ceramic filters and substrates. Ceramics comprised of magnesium-stabilized aluminum titanate and at least one of mullite and cordierite provide a more durable filter in the presence of copper than previous magnesium-free compositions. However, to achieve target thermal shock resistance and pore microstructure, these ceramics have relied upon the addition of expensive rare earth oxide sintering aids, such as greater than 1.0 wt% cerium oxide. Exemplary embodiments of the present disclosure provide processes and compositions for reducing the amount of rare earth oxide sintering aid (hereinafter "rare earth oxide" or "sintering aid") while maintaining the desired physical and microstructural properties. According to some of these exemplary embodiments, batch cost may be reduced while shrinkage at a top soak temperature may be controlled.

A ceramic article may comprise a first crystalline phase comprised predominantly of a solid solution of aluminum titanate and magnesium dititanate (MgTi₂O₅-Al₂TiO₅), a second crystalline phase comprising cordierite, and a third crystalline phase comprising mullite, the article having a composition, as expressed in weight percent on an oxide basis of from 1 to 10% MgO; from 40 to 61% Al₂O₃; from 23 to 50% TiO₂; from 3 to 25% SiO₂, and a rare earth oxide. The rare earth oxide can be present in the range of from greater than 0.1 to 5 weight% relative to the total weight of the inorganic batch composition, for example, the rare earth oxide can be present in the range of from 0.3 to 3.0 wt %, 0.4 to 2.5 wt %, 0.5 to 1.5 wt %, 2.5 to 4.5 wt %, 1 to 4 wt %, 0.15 to 3 weight%, 0.2 to 2 weight%, or even 0.3 to 1.5 wt%. According to some of these exemplary embodiments, the article can have a composition, as expressed in weight percent on an oxide basis of from 5 to 10% MgO; from 40 to 50% Al₂O₃; from 30 to 35% TiO₂; from 10 to 20% SiO₂.

According to exemplary embodiments, the rare earth oxide can be at least one of a lanthanide oxide and yttrium oxide. The rare earth oxide can be cerium oxide, lanthanum oxide, etc. For example, the rare earth oxide can be one of cerium oxide and at least one of yttrium oxide and lanthanum oxide. For example, the rare earth oxide can be cerium oxide and yttrium oxide, cerium oxide and lanthanum oxide, or cerium oxide, yttrium oxide, and lanthanum oxide. Further, for example, the rare earth oxide can be cerium oxide alone. Even further, for example, the rare earth oxide can be at least one of yttrium oxide and lanthanum oxide, for example, yttrium oxide alone, lanthanum oxide alone, or yttrium oxide and lanthanum oxide.

Still further, the ceramic composition can also optionally comprise one or more metal oxide additives. The metal oxide additive can, for example, be present in an amount of from 0 to 5 weight percent of the total composition and can include, for example, one or more metal oxides such as Fe₂TiO₅, CaO, SrO, and the like. Iron oxide from a suitable iron source, present as ferrous or ferric oxide or in combination with other oxides, e.g., as Fe₂TiO₅, can be present in some of these exemplary embodiments in an amount, calculated as Fe₂TiO₅, of from 0 to 3 weight % Fe₂TiO₅. The presence of Fe₂TiO₅ can be useful for slowing decomposition in oxidizing atmospheres. When both Fe₂TiO₅ and a spinel phase are present in the ceramic body, the spinel solid solution can also additionally contain ferrous and/or ferric iron in the solid solution.

The rare earth oxide(s) or metal oxide(s) can be provided to lower the firing temperature and broaden the firing window required to form the ceramic composition.

The ceramic article may comprise a composition expressed on an oxide basis of: a(Al₂TiO₅) + b(MgTi₂O₅) + c(2MgO · 2Al₂O₃ · 5SiO₂) + d(3Al₂O₃ · 2SiO₂) + e(MgO Al₂O₃) + f(2MgO·TiO₂) + g(X) + i(Fe₂O₃ · TiO₂) + j(TiO₂) + k(Al₂O₃) + m(SiO₂) + n(MgO), where a, b, c, d, e, f, g, i, j, k, m, and n are weight fractions of each component such that (a + b + c + d + e + f + g + i + j + k +m + n) = 1.00, where X is the rare earth oxide, and wherein the rare earth oxide comprises a particle size distribution D₉₀ of less than 5 µm and a median particle size D₅₀ of about 0.4 µm.

The coefficients (a, b, c, d, e, f, g, i, j, k, m, and n) may be 0.3 ≤ a ≤ 0.88, 0.03 ≤ b ≤ 0.3, 0.02 ≤ c ≤ 0.5, and 0.001 ≤ g ≤ 0.05. The coefficients may also be 0.3 ≤ a ≤ 0.88, 0.03 ≤b ≤ 0.3, 0.02 ≤ c ≤ 0.5, 0.0 ≤d ≤ 0.4, 0.0 ≤ e ≤ 0.25, 0.0 ≤ f ≤ 0.1, 0.001 ≤ g ≤ 0.05, 0.0 ≤ i ≤ 0.05, 0.0 ≤ j ≤ 0.2, 0.0 ≤ k ≤ 0.15, 0.0 ≤ m ≤ 0.05, 0.0 ≤ n ≤ 0.03. Further, coefficient g may be 0.002≤ g ≤ 0.03. It will be recognized that the oxides and oxide combinations used to define the oxide compositions of these ceramics will not necessarily be present in the ceramic bodies as the corresponding free oxides or crystal phases, other than as those crystal phases are specifically identified herein as characteristic of these ceramics. It will also be recognized that while the sum of a, b, c, d, e, f, g, i, k, m, and n is 1.00, it is the ratio of oxides and oxide combinations that are expressed. That is, the composite ceramic body may include other impurities in addition to the ratio of oxides and oxide combinations expressed. This will be apparent in view of the examples disclosed below.

The solid solution aluminum titanate and magnesium dititanate phase preferably exhibits a pseudobrookite crystal structure. To that end, the composition of the pseudobrookite phase can depend upon the processing temperature as well as the overall bulk composition of the ceramic and, as such, can be determined by an equilibrium condition. However, the composition of the pseudobrookite phase comprises from approximately 5% to 35% MgTi₂O₅ by weight. Still further, while the total volume of the pseudobrookite phase can also vary, in another embodiment, the total volume is preferably in the range of from 50 to 95 volume% of the overall ceramic composition.

Optionally, the composite ceramic body can further comprise one or more phases selected from the group consisting of sapphirine, a titania polymorph such as rutile or anatase, corundum, and a spinel solid solution (MgAl₂O₄-Mg₂TiO₄). When present, the composition of the spinel phase will also depend on processing temperatures and overall bulk composition. However, the spinel phase can comprise at least about 95% MgAl₂O₄.

The ceramic body may comprise approximately 10 to 35 wt.% cordierite, approximately 3 to 10 wt.% mullite, approximately 50 to 70 wt.% of a pseudobrookite phase consisting predominantly of an Al₂TiO₅-MgTi₂O₅ solid solution, and approximately 0.1 to 3.0 wt.% of a rare earth oxide addition.

The ceramic bodies of the present disclosure can in some instances comprise a relatively high level of total porosity. For example, bodies comprising a total porosity, %P, of at least 40%, at least 45%, at least 50%, or even at least 60%, as determined by mercury porosimetry, can be provided.

In addition to the relatively high total porosities, ceramic bodies can also comprise a relatively narrow pore size distribution evidenced by a minimized percentage of relatively fine and/or relatively large pore sizes. To this end, relative pore size distributions can be expressed by a pore fraction which, as used herein, is the percent by volume of porosity, as measured by mercury porosimetry, divided by 100. For example, the quantity d₅₀ represents the median pore size based upon pore volume, and is measured in micrometers; thus, d₅₀ is the pore diameter at which 50% of the open porosity of the ceramic sample has been intruded by mercury. The quantity d₉₀ is the pore diameter at which 90% of the pore volume is comprised of pores whose diameters are smaller than the value of d₉₀; thus, d₉₀ is also equal to the pore diameter at which 10% by volume of the open porosity of the ceramic has been intruded by mercury. Still further, the quantity d₁₀ is the pore diameter at which 10% of the pore volume is comprised of pores whose diameters are smaller than the value of d₁₀; thus, d₁₀ is equal to the pore diameter at which 90% by volume of the open porosity of the ceramic has been intruded by mercury. The values of d₁₀ and d₉₀ are also expressed in units of micrometers.

The median pore diameter, d₅₀, of the pores present in the instant ceramic articles can, in one embodiment, be at least 101µm, more preferably at least 14µm, or still more preferably at least 16µm. In another aspect, the median pore diameter, d₅₀, of the pores present in the instant ceramic articles do not exceed 30µm, and more preferably do not exceed 25 µm, and still more preferably do not exceed 20µm. In still another aspect, the median pore diameter, d₅₀, of the pores present in the instant ceramic articles can be in the range of from 10µm to 30µm, for example, from 15µm to 25µm, from 14µm to 24µm, and even from 16µm to 20µm. To this end, a combination of the aforementioned porosity values and median pore diameter values can provide low clean and soot-loaded pressure drop while maintaining useful filtration efficiency when the ceramic bodies of the present disclosure are used in diesel exhaust filtration applications.

The relatively narrow pore size distribution of the exemplary ceramic articles can, in some aspects, be evidenced by the width of the distribution of pore sizes finer than the median pore size, d₅₀, further quantified as pore fraction. As used herein, the width of the distribution of pore sizes finer than the median pore size, d₅₀, are represented by a "d_{factor}" or "df" value which expresses the quantity (d₅₀ - d₁₀)/ d₅₀. To this end, the ceramic bodies of the present disclosure can comprise a d_{factor} value that does not exceed 0.50, 0.40, 0.35, or even that does not exceed 0.30. In some examples, the d_{factor} value of the ceramic body does not exceed 0.25 or even 0.20. To this end, a relatively low d_{f} value indicates a low fraction of fine pores, and low values of d_{f} can be beneficial for ensuring low soot-loaded pressure drop when the disclosed ceramic bodies are utilized in diesel filtration applications.

The relatively narrow pore size distribution of the disclosed ceramic articles can also be evidenced by the width of the distribution of pore sizes that are finer or coarser than the median pore size, d₅₀, further quantified as a pore fraction. As used herein, the width of the distribution of pore sizes that are finer or coarser than the median pore size, d₅₀, are represented by a "d_{breadth}" or "d_{b}" value which expresses the quantity (d₉₀ - d₁₀)/d₅₀. To this end, the ceramic structure of the present disclosure can comprise a d_{b} value that is less than 1.50, less than 1.25, less than 1.10, or even less than 1.00. In some examples, the value of d_{b} is not more than 0.8, more preferably not greater than 0.7, and even more preferably not greater than 0.6. A relatively low value of d_{b} can provide a relatively higher filtration efficiency and higher strength for diesel filtration applications.

The ceramic bodies of the present disclosure can exhibit a low coefficient of thermal expansion resulting in excellent thermal shock resistance (TSR). As will be appreciated by one of ordinary skill in the art, TSR is inversely proportional to the coefficient of thermal expansion (CTE). That is, a ceramic body with low thermal expansion will typically have higher thermal shock resistance and can survive the wide temperature fluctuations that are encountered in, for example, diesel exhaust filtration applications. Accordingly, the ceramic articles of the present disclosure are characterized by having a relatively low coefficient of thermal expansion (CTE) in at least one direction and as measured by dilatometry, that is less than or equal to 11 × 10⁻⁷/°C, less than or equal to 10.0 × 10⁻⁷/°C, or even less than or equal to 8.0 × 10⁻⁷/°C, across the temperature range of from 24°C to 800°C.

Still further, it should be understood that examples of the present disclosure can exhibit any desired combination of the aforementioned properties. For example it is preferred that the CTE (25-800°C) does not exceed 11×10⁻⁷/°C (and preferably not more than 10×10⁻⁷/°C), the porosity %P is at least 55%, the median pore diameter is at least 14 µm (and preferably at least 17 µm), and the value of d_{f} is not more than 0.35 (and preferably not more than 0.30). It is further preferred that such exemplary ceramic bodies exhibit a value of d_{b} that does not exceed 1.0, and more preferably that does not exceed 0.85, and still more preferably that does not exceed 0.75. In another exemplary embodiment, the CTE (25-800°C) does not exceed 18×10⁻⁷/°C and the porosity %P is at least 40%. For example, the CTE (25-800°C) does not exceed 18×10⁻⁷/°C and the porosity %P is at least 60%. In another example, CTE (25-800°C) does not exceed 12×10⁻⁷/°C and the porosity %P is at least 40%. In a further example, CTE (25-800°C) does not exceed 12×10⁻⁷/°C and the porosity %P is at least 60%.

The ceramic article can comprise a coefficient of thermal expansion from RT to 800°C (CTE_{RT-800°C}) below 12 × 10⁻⁷ /°C. According to these exemplary embodiments, the ceramic article can comprise a porosity (%P) greater than 55%, for example, greater than 56%, greater than 58%, **greater** than 60%, greater than 62%, or even greater than 65%. In these exemplary embodiments, the ceramic article can comprise a CTE_{RT-800°C} of below 10 × 10⁻⁷ /°C, for example, below 9 × 10⁻⁷ /°C, below 8 × 10⁻⁷ /°C, or even below 6 × 10⁻⁷ /°C. The ceramic article can comprise an amount of sintering aid less than 0.75 mol %. The mol % of sintering aid is calculated on the elemental basis of the rare earth oxide, for example, a lanthanide oxide, yttrium oxide, or combination thereof. For example Y₂O₃ (yttrium oxide) has two moles of yttrium sintering aid. As another example, CeO₂ (ceria, a lanthanide oxide) has one mole of cerium sintering aid. Such low values of CTE/%P/mol % of sintering aid can be achieved by using a fine particle size rare earth oxide as described further herein.

The ceramic article can comprise greater than 65% porosity, a CTE_{RT-800°C} of below 12 × 10⁻⁷ /°C, and less than 0.75 mol % of sintering aid. In some of examples, the ceramic article can comprise greater than 62% porosity, a CTE_{RT-800°C} of below 10 × 10⁻⁷ /°C, and less than 0.75 mol % of sintering aid. In some of these examples, the ceramic article can comprise greater than 60% porosity, a CTE_{RT-800°C} of below 9 × 10⁻⁷ /°C, and less than 0.75 mol % of sintering aid. In some of these examples, the ceramic article can comprise greater than 58% porosity, a CTE_{RT-800°C} of below 8 × 10⁻⁷ /°C, and less than 0.75 mol % of sintering aid. In some of these examples, the ceramic article can comprise greater than 56% porosity, a CTE_{RT-800°C} of below 6 × 10⁻⁷ /°C, and less than 0.75 mol % of sintering aid.

In some exemplary examples of the disclosure, the microstructure of the ceramic article comprises a uniform distribution of phases. The uniform distribution of phases is achieved through the use of a fine particle size rare earth oxide in a manufacturing process as described further below. **FIG. 2A** is a scanning electron micrograph (SEM) image of a cross section through cell walls that form channels of a comparative honeycomb body comprised of approximately 10 to 25 wt% cordierite, approximately 5 to 30 wt% mullite, approximately 50 to 70 wt% of a pseudobrookite phase consisting predominantly of an Al₂TiO₅-MgTi₂O₅ solid solution, and approximately 1.5 wt% of CeO₂ addition. **FIGS. 2B** **and** **2C** are enlarged views through the cell wall and at the cell wall edge, respectively, of **FIG. 2A****.** **FIG. 3A** is a scanning electron micrograph (SEM) image of a cross section through cell walls of an exemplary honeycomb body according to embodiments of the disclosure comprised of approximately 10 to 25 wt% cordierite, approximately 5 to 30 wt% mullite, approximately 50 to 70 wt% of a pseudobrookite phase consisting predominantly of an Al₂TiO₅-MgTi₂O₅ solid solution, and approximately 1.0 wt% of CeO₂ addition. **FIGS. 3B** **and** **3C** are enlarged views through the cell wall and at the cell wall edge, respectively, of **FIG. 3A****.** The composition of the comparative honeycomb body and the honeycomb body according to exemplary embodiments of the disclosure were the same except for the amount of CeO₂ addition. Furthermore, the CeO₂ addition in the exemplary honeycomb body had a finer particle size distribution.

As can be seen in **FIGS. 2B** **and** **2C****,** cordierite (cord) and mullite (mu) phases are relatively inhomogeneously distributed for a given pseudobrookite (psb) phase size and distribution in the comparative honeycomb body. In contrast, the cordierite (cord) and mullite (mu) phases are more homogeneously distributed for the given pseudobrookite (psb) phase size and distribution in the exemplary honeycomb body having less CeO₂ addition, but a finer particle size distribution of CeO₂ addition in the manufacturing process as shown in **FIGS. 3B** **and** **3C****.** The circles and arrows in FIG. 3B indicate clearly discernible regions of uniformly distributed mullite and cordierite (mu+cord).

Exemplary embodiments of the present disclosure also provide a method of manufacturing the exemplary composite cordierite, mullite, and aluminum magnesium titanate ceramic articles from a ceramic forming precursor batch composition comprised of certain inorganic powdered raw materials. Generally, the method first comprises providing an inorganic batch composition comprising a magnesia source, a silica source, an alumina source, and a titania source. The inorganic batch composition is then mixed together with one or more processing aid(s) selected from the group consisting of a plasticizer, lubricant, binder, pore former, and solvent, to form a plasticized ceramic precursor batch composition. The plasticized ceramic precursor batch composition can be shaped or otherwise formed into a green body, optionally dried, and subsequently fired under conditions effective to convert the green body into a ceramic article.

The magnesia source can, for example and without limitation, be selected from one or more of MgO, Mg(OH)₂, MgCO₃, MgAl₂O₄, Mg₂SiO₄, MgSiO₃, MgTiO₃, Mg₂TiO₄, MgTi₂O₅, talc, and calcined talc. Alternatively, the magnesia source can be selected from one or more of forsterite, olivine, chlorite, or serpentine. Preferably, the magnesia source has a median particle diameter that does not exceed 35 µm, and preferably that does not exceed 30 µm. To this end, as referred to herein, all particle diameters are measured by a laser diffraction technique such as by a Microtrac particle size analyzer.

The alumina source can, for example and without limitation, be selected from an alumina-forming source such as corundum, Al(OH)₃, boehmite, diaspore, a transition alumina such as gamma-alumina or rho-alumina. Alternatively, the alumina source can be a compound of aluminum with another metal oxide such as MgAl₂O₄, Al₂TiO₅, mullite, kaolin, calcined kaolin, phyrophyllite, kyanite, etc. In one embodiment, the weighted average median particle size of the alumina sources is preferably in the range of from 10 µm to 60 µm, and more preferably in the range of from 20 µm to 45 µm. In still another embodiment, the alumina source can be a combination of one or more alumina forming sources and one or more compounds of aluminum with another metal oxide.

The titania source can, in addition to the compounds with magnesium or alumina described above, be provided as TiO₂ powder.

The silica source can be provided as a SiO₂ powder such as quartz, cryptocrystalline quartz, fused silica, diatomaceous silica, low-alkali zeolite, or colloidal silica. Additionally, the silica source can also be provided as a compound with magnesium and/or aluminum, including for example, cordierite, chlorite, and the like. In still another embodiment, the median particle diameter of the silica source is preferably at least 5 µm, more preferably at least 10 µm, and still more preferably at least 20 µm.

As described above, one or more rare earth oxide or metal oxide sintering aid(s) or additive(s) can optionally be added to the precursor batch composition to lower the firing temperature and broaden the firing window required to form the ceramic composition. The sintering aid or additive can, for example, be present in an amount of from 0.1 to 5 weight percent of the total composition and can include, for example, one or more a metal oxides such as Fe₂TiO₅, CaO, SrO, Y₂O₃, CeO₂, and La₂O₃. In one embodiment, yttrium oxide (Y₂O₃) and/or a lanthanide oxide (La₂O₃ or CeO₂) has been found to be a particularly good sintering additive when added in an amount of between about 0.1 and 5.0 wt. % relative to the total weight of the inorganic batch composition, for example, between about 0.2 and 2.0 wt.%. Similarly, an addition of Fe₂TiO₅ can be useful for slowing decomposition in oxidizing atmospheres when added in an amount of from 0 to 3 weight %.

It was surprisingly discovered that the particle size of the rare earth oxide milled down to about a 0.4 µm median particle size (D₅₀) provided unexpected advantages in the ceramic honeycomb body according to exemplary embodiments of the disclosure compared to a ceramic honeycomb body manufactured using the rare earth oxide having about a 7 to 20 µm median particle size (D₅₀). The milled particle size distribution having the median particle size of about 0.4 µm is referred to herein as fine and the 7 to 20 µm median particle size particle size distribution is referred to as coarse or as-received. While the fine particle size distribution was obtained by milling in the examples disclosed herein, other methods of obtaining a fine particle size distribution are also included in the scope of the disclosure, such as by calcining, sieving, separating, filtering, precipitation from solution, and the like. The fine particle size distribution having a median particle size of less than or equal to about 1 µm can be considered fine within exemplary embodiments of the disclosure. According to the invention, the fine particle size distribution has a median particle size of less than or equal to 0.7 µm, less than or equal to 0.5 µm, or even less than or equal to 0.4 µm. When the median particle size is greater than about 1 µm, the advantages of the fine rare earth oxide particle size distribution are not achieved.

Further, the fine rare earth oxide can have a have a particle size distribution of D₉₀ less than or equal to about 5 µm according to these exemplary embodiments. D₉₀ is the particle size where 90% of the particles in the particle size distribution are smaller than D₉₀. That is, the size of the particle refers to the diameter of the particle according to known methods of determining particle sizes. For example, the rare earth oxide can have a D₉₀ of less than or equal to about 3 µm, such as less than or equal to about 1 µm. According to the invention, the rare earth oxide has a D₅₀ of less than or equal to 0.7 µm and a D₉₀ of less than or equal to about 5 µm. For example, the rare earth oxide can have a D₅₀ of less than or equal to about 0.7 µm and a D₉₀ of less than or equal to about 5 µm, a D₅₀ of less than or equal to about 0.7 µm and a D₉₀ of less than or equal to about 3 µm, a D₅₀ of less than or equal to about 0.7 µm and a D₉₀ of less than or equal to about 1 µm, or even a D₅₀ of less than or equal to about 0.5 µm and a D₉₀ of less than or equal to about 5 µm. For example, the rare earth oxide can have a D₅₀ of less than or equal to about 0.5 µm and a D₉₀ of less than or equal to about 3 µm, a D₅₀ of less than or equal to about 0.5 µm and a D₉₀ of less than or equal to about 1 µm, or even a D₅₀ of less than or equal to about 0.4 µm and a D₉₀ of less than or equal to about 5 µm. For example, the rare earth oxide can have a D₅₀ of less than or equal to about 0.4 µm and a D₉₀ of less than or equal to about 3 µm, or even a D₅₀ of less than or equal to about 0.4 µm and a D₉₀ of less than or equal to about 1 µm.

The advantages of the fine rare earth oxide particle size distribution include a lower coefficient of thermal expansion (CTE) measured from room temperature (RT) of about 24°C to about 800°C (CTE_{RT-800}). As a result, less rare earth oxide can be used, which reduces cost of raw materials. Rare earth oxides can be relatively expensive materials and it is desirable to limit the amount needed. In addition, the firing cycle has a top soak hold time. Using fine rare earth oxide allows for a shorter top soak hold time to achieve the desired properties. Holding for long times at top soak can be energy intensive and expensive. Limiting the top soak hold time increases kiln capacity and can reduce the cost of the firing.

Further, the material of the ceramic precursor batch composition (that forms the composite comprising aluminum titanate-magnesium dititanate, cordierite, and mullite upon firing) of the green body according to exemplary embodiments of the disclosure is stable at top soak temperatures in that there is a large temperature range during which the firing shrinkage does not change much. This may be considered advantageous in some situations, but it also means that there is little control over the amount of firing shrinkage (or growth) one can induce or reduce by adjusting the top soak. That is, the size of fired ceramic products can be adjusted by changing the soak temperature of the firing. The shrinkage can, for example, be determined by first measuring a sample as an extruded green body, wherein at least one dimension of the green body is measured prior to the green body passing into the kiln. Later, the sample can be measured as a porous ceramic article, wherein the at least one dimension of the article is measured subsequent to the article passing out of the kiln. The shrinkage can then be determined by comparing the at least one measured dimension of the sample as an extruded green body with the at least one measured dimension of the sample as a porous ceramic article.

Methods of minimizing the variability in the shrinkage (or growth) of ceramic articles can focus on controlling raw materials (or properties of raw materials) added to the initial batch composition. These methods can include controlling the particle size distribution (PSD) of batch constituents because when there is a significant change in the raw material particle size distribution, there can be a subsequent high change in shrinkage.

Methods of controlling PSD include measures such as selecting specific ratios of raw material batch constituents with known particle size distributions, calcining or milling raw material batch constituents to a defined particle size distribution, or controlling the rate at which raw material batch constituents are fed through a milling apparatus. However, even when these processes are combined with some sort of feedback control mechanism (e.g., measuring the shrinkage in the fired part and adjusting the raw material feed accordingly) substantial amounts of ware must often be discarded because much material is already in process downstream of raw material feed and mixing at the time it is determined that the raw material feed needs adjustment.

Thus, periodically determining a shrinkage of at least one sample and adjusting the top soak temperature if the shrinkage is outside of a predetermined range can be important to efficient manufacturing of porous ceramic honeycomb bodies as described in U.S. Patent Application Serial No. 13/036,596.

Shrinkage range refers to the maximum difference in shrinkage between the ceramic articles. For example, the difference in shrinkage measured at the diameter of the part between the part with the most shrinkage and the part with the least shrinkage for a plurality of parts fired in a kiln. The shrinkage range can be due to temperature non-uniformity across the kiln (kiln temperature differential) such that various parts across the kiln are exposed to different top soak temperatures.

The ceramic precursor batch composition for the composite aluminum titanate-magnesium dititanate, cordierite and mullite product as described herein made using the coarse median particle size rare earth oxide undergoes significant change in shrinkage with change in top soak. Shrinkage control of these comparative materials is difficult due to this high change in shrinkage with change in top soak temperature. Top soak refers to a top soak time during which the body is held at a top soak temperature (the highest temperature to which the body is exposed in the kiln) during firing. The top soak temperature, also referred to herein as the maximum temperature or maximum soak temperature, refers to the temperature at the top soak, and top soak time refers to the time at the top soak.

Surprisingly, the advantages of the fine rare earth oxide median particle size include providing more control of shrinkage with change in top soak for the composite aluminum titanate-magnesium dititanate, cordierite and mullite body made according to the exemplary embodiments of the disclosure made using the fine median particle size rare earth oxide as described herein.

Still further, the ceramic precursor batch composition may comprise other additives such as surfactants, oil lubricants and pore-forming material. Non-limiting examples of surfactants that may be used as forming aids are C₈ to C₂₂ fatty acids, and/or their derivatives. Additional surfactant components that may be used with these fatty acids are C₈ to C₂₂ fatty esters, C₈ to C₂₂ fatty alcohols, and combinations of these. Exemplary surfactants are stearic, lauric, myristic, oleic, linoleic, palmitic acids, and their derivatives, tall oil, stearic acid in combination with ammonium lauryl sulfate, and combinations of all of these. In an illustrative embodiment, the surfactant is lauric acid, stearic acid, oleic acid, tall oil, and combinations of these. In some embodiments, the amount of surfactants is from about 0.25% by weight to about 2% by weight.

Non-limiting examples of oil lubricants used as forming aids include light mineral oil, corn oil, high molecular weight polybutenes, polyol esters, a blend of light mineral oil and wax emulsion, a blend of paraffin wax in corn oil, and combinations of these. In some embodiments, the amount of oil lubricants is from about 1% by weight to about 10% by weight. In an exemplary embodiment, the oil lubricants are present from about 3% by weight to about 6% by weight.

The precursor composition can, if desired, contain a pore-forming agent to tailor the porosity and pore size distribution in the fired body for a particular application. A pore former is a fugitive material which evaporates or undergoes vaporization by combustion during drying or heating of the green body to obtain a desired, usually higher porosity and/or coarser median pore diameter. A suitable pore former can include, without limitation, carbon; graphite; starch, such as pea or potato; wood, shell, or nut flour; polymers such as polyethylene beads; waxes; and the like. When used, a particulate pore former can have a median particle diameter in the range of from 10 µm to 70 µm, and more preferably from 15 µm to 50 µm.

The inorganic ceramic forming batch components, along with any sintering aid and/or pore former, can be intimately blended with a liquid vehicle and forming aids which impart plastic formability and green strength to the raw materials when they are shaped into a body. When forming is done by extrusion, a cellulose ether binder such as methylcellulose, hydroxypropyl methylcellulose, methylcellulose derivatives, and/or any combinations thereof, can serve as a temporary organic binder, and sodium stearate can serve as a lubricant. The relative amounts of forming aids can vary depending on factors such as the nature and amounts of raw materials used, etc. For example, the amounts of forming aids can be about 2% to about 10% by weight of methyl cellulose, and preferably about 3% to about 6% by weight, and about 0.5% to about 1% by weight sodium stearate, stearic acid, oleic acid or tall oil, and preferably about 0.6% by weight. The raw materials and the forming aids can be mixed together in dry form and then mixed with water as the vehicle. The amount of water can vary from one batch of materials to another and therefore is determined by pre-testing the particular batch for extrudability.

The liquid vehicle component can vary depending on the type of material used in order to impart optimum handling properties and compatibility with the other components in the ceramic batch mixture. The liquid vehicle content can be in the range of from 10% to 50% by weight of the plasticized composition. In some embodiments, the liquid vehicle component can comprise water. In other embodiments, depending on the component parts of the ceramic batch composition, it should be understood that organic solvents such as, for example, methanol, ethanol, or a mixture thereof can be used as the liquid vehicle.

Forming or shaping of the green body from the plasticized precursor composition may be done by, for example, ceramic fabrication techniques, such as uniaxial or isostatic pressing, extrusion, slip casting, and injection molding. Extrusion is preferred when the ceramic article is of a honeycomb geometry, such as for a catalytic converter flow-through substrate or a diesel particulate wall-flow filter. The resulting green bodies can be optionally dried, and then fired in a gas or electric kiln or by microwave heating, under conditions effective to convert the green body into a ceramic article. For example, the firing conditions effective to convert the green body into a ceramic article can comprise heating the green body at a maximum soak temperature in the range of from 1250°C to 1450°C, for example, in the range of from 1300°C to 1350°C, or in the range of from 1330°C to 1380°C, and maintaining the maximum soak temperature for a hold time sufficient to convert the green body into a ceramic article, followed by cooling at a rate sufficient not to thermally shock the sintered article. For example, maintaining the maximum soak temperature can comprise maintaining the maximum soak temperature for about 10 hours (h) to about 22 h sufficient to convert the green body into a ceramic article.

In these exemplary embodiments the coefficient of thermal expansion (CTE_{RT-800}) of the ceramic article can change from about 9.5 × 10⁻⁷/°C to less than about 7.5 × 10⁻⁷/°C when the maximum soak temperature in the range of 1250 °C to 1450°C increases by about 20°C. In these exemplary embodiments the CTE_{RT-800} can change by about 2 × 10⁻⁷/°C _{RT to 800°C} when the maximum soak temperature in the range of 1250 °C to 1450 °C increases by about 20 °C.

In these exemplary embodiments under these conditions, the dry green to fired firing shrink sensitivity may be greater than about 0.01%/°C when the maximum soak temperature is in the range of 1250°C to 1450°C for the ceramic precursor batch composition for the composite aluminum titanate-magnesium dititanate, cordierite and mullite product as described herein made using the fine median particle size rare earth oxide. Preferably, the dry green to fired firing shrink sensitivity may be less than about 0.05%/°C when the maximum soak temperature is in the range of 1250°C to 1450°C. More preferably, the dry green to fired firing shrink sensitivity is less than about 0.03%/°C when the maximum soak temperature is in the range of 1250 °C to 1450 °C. Firing shrink sensitivity within these disclosed ranges can provide control of shrinkage variation across a plurality of articles in a kiln that has a temperature differential of up to 10°C.

### Examples

The following examples are not intended to be limiting of the disclosure. As disclosed herein, experiments have shown that milling the size of as received rare earth oxide, such as lanthanide oxides, particularly cerium and/or lanthanum oxides, and yttria to be used in the ceramic precursor batch composition for the composite aluminum titanate-magnesium dititanate, cordierite and mullite product as described herein made using the fine median particle size rare earth oxide can lead to use of less material while achieving the same level of benefits of the rare earth oxide in the batch composition, but at a lower raw material cost.

**FIG. 4** is a graph showing measurement data for particle size distributions of ceria as received (coarse) compared to after milling (fine). The solid curve represents particles as received. The dashed line curve represents particles after milling, jet milled on a 5.1 cm (2 inch) mill. D₅₀ for the fine ceria was 0.33 µm, D₉₀ for the fine ceria was 1.7 µm, D₅₀ for the coarse ceria was 5.8 µm, D₉₀ for the coarse ceria was 11.1 µm. **FIG. 5** is a graph showing measurement data for the particle size distributions of yttrium oxide. The solid line represents the particle size distribution curve of as received yttrium oxide (coarse) and the dashed line represents the particle size distribution curve of yttrium oxide after milling (fine). D₅₀ for the fine yttria was 0.52 µm, D₉₀ for the fine yttria was 1.0 µm, D₅₀ for the coarse yttria was 5.7 µm, D₉₀ for the coarse yttria was 12.6 µm. The abscissas of **FIGS. 4 and 5** are logarithmic scale. The ordinates are arbitrary units. **FIGS. 4 and 5** show a significant reduction in median particle size from 5-10 µm to submicron level, in particular, for ceria from about 6 µm to 0.4 µm and for yttria from about 6 µm to 0.5 µm.

Tables 1 and 2 below provide compositions and properties of rare earth oxides (sintering aids) at different levels in the ceramic precursor batch composition (that forms the composite comprising aluminum titanate-magnesium dititanate (pseudobrookite), cordierite, and mullite upon firing) for Comparative (Coarse) and Exemplary (fine) examples.

**Table 1**

| | Example 3 | Example 4 | | Example 5 | Example 6 | |
|---|---|---|---|---|---|---|
| As Received or Milled | Comparative | Exemplary | | Comparative | Exemplary | |
| | Coarse | Fine | Difference of Coarse minus Fine | Coarse | Fine | Difference of Coarse minus Fine |
| Sintering Aid Type | Y₂O₃ | Y₂O₃ | Y₂O₃ | CeO₂ | CeO2 | CeO2 (0.50%) |
| Sintering Aid Amount, % mass | 0.32% | 0.32% | (0.32%) | 0.50% | 0.50% | |
| Coarse PSD CeO₂ | | | | 0.5 | | |
| Fine PSD CeO₂ | | | | | 0.5 | |
| Coarse PSD Y₂O₃ | 0.3 | | | | | |
| Fine PSD Y₂O₃ | | 0.3 | | | | |

| Inorganics by Mass | | | | | | |
|---|---|---|---|---|---|---|
| Alumina | 42.2 | 42.2 | 0.0 | 42.1 | 42.1 | 0.0 |
| Titania | 33.5 | 33.5 | 0.0 | 33.4 | 33.4 | 0.0 |
| Talc | 21.0 | 21.0 | 0.0 | 20.9 | 20.9 | 0.0 |
| Silica | 3.0 | 3.0 | 0.0 | 3.0 | 3.0 | 0.0 |

| Moles of Inorganic in 100 grams | | | | | | |
|---|---|---|---|---|---|---|
| Al₂O₃ | 0.4138 | 0.4138 | 0.0000 | 0.4131 | 0.4131 | 0.0000 |
| TiO₂ | 0.2620 | 0.2620 | 0.0000 | 0.2616 | 0.2616 | 0.0000 |
| Mg₃Si₄O₁₀(OH)₂ | 0.0553 | 0.0553 | 0.0000 | 0.0552 | 0.0552 | 0.0000 |
| SiO₂ | 0.0345 | 0.0345 | 0.0000 | 0.0345 | 0.0345 | 0.0000 |
| CeO₂ | 0.0000 | 0.0000 | 0.0000 | 0.0028 | 0.0028 | 0.0000 |
| Y₂O₃ | 0.0014 | 0.0014 | 0.0000 | 0.0000 | 0.0000 | 0.0000 |

| Moles of Elemental Oxides | | | | | | |
|---|---|---|---|---|---|---|
| Al₂O₃ | 0.4138 | 0.4138 | 0.0000 | 0.4131 | 0.4131 | 0.0000 |
| TiO₂ | 0.2620 | 0.2620 | 0.0000 | 0.2616 | 0.2616 | 0.0000 |
| SiO₂ | 0.2557 | 0.2557 | 0.0000 | 0.2553 | 0.2553 | 0.0000 |
| MgO | 0.1659 | 0.1659 | 0.0000 | 0.1656 | 0.1656 | 0.0000 |
| CeO₂ | 0.0000 | 0.0000 | 0.0000 | 0.0028 | 0.0028 | 0.0000 |
| Y₂O₃ | 0.0014 | 0.0014 | 0.0000 | 0.0000 | 0.0000 | 0.0000 |

| Moles of Elemental Oxides, %, not including sintering aid | | | | | | |
|---|---|---|---|---|---|---|
| Al₂O₃ | 37.70% | 37.70% | 0.00% | 37.70% | 37.70% | 0.00% |
| TiO₂ | 23.88% | 23.88% | 0.00% | 23.88% | 23.88% | 0.00% |
| SiO₂ | 23.30% | 23.30% | 0.00% | 23.30% | 23.30% | 0.00% |
| MgO | 15.12% | 15.12% | 0.00% | 15.12% | 15.12% | 0.00% |

| Moles of Sintering Aid, Super Addition to Batch | | | | | | |
|---|---|---|---|---|---|---|
| CeO₂ | | | | 0.26% | 0.26% | 0.00% |
| (Y₂O₃)/2 | 0.26% | 0.26% | 0.00% | | | |
| Ratio Sintering Aid to Titania | | | | | | |
| | 0.0108 | 0.0108 | 0.0000 | 0.0108 | 0.0108 | 0.0000 |

| Pore Formers by Mass | | | | | | |
|---|---|---|---|---|---|---|
| Graphite | 10.0 | 10.0 | 0.0 | 10.0 | 10.0 | 0.0 |
| Starch | 28.0 | 28.0 | 0.0 | 28.0 | 28.0 | 0.0 |

| Extrusion Aids and Binders by Mass | | | | | | |
|---|---|---|---|---|---|---|
| Fatty Acid | 1.38 | 1.38 | 0.00 | 1.38 | 1.38 | 0.00 |
| Binder: F240 | 2.07 | 2.07 | 0.00 | 2.07 | 2.07 | 0.00 |
| Binder: TY11A | 4.14 | 4.14 | 0.00 | 4.14 | 4.14 | 0.00 |

| Physical Properties - average of all firings | | | | | | |
|---|---|---|---|---|---|---|
| CTE, RT to 800°C, 10⁻⁷/°C | 14.3 | 13.2 | -7.9% | 14.8 | 13.3 | -10.1% |

| Crystal Phases | | | | | | |
|---|---|---|---|---|---|---|
| pseudobrookite | | | | 60.0 | 59.7 | -0.5% |
| cordierite | | | | 27.6 | 28.1 | 1.9% |
| mullite | | | | 6.1 | 5.8 | -4.6% |
| corundum | | | | 4.3 | 4.3 | 0.5% |
| rutile | | | | 1.4 | 1.4 | 0.0% |
| CeTi₂O₆ | | | | 0.6 | 0.6 | 7.5% |
| Al₂₍₁₋ₓ₎MgₓTi₍₁₊ₓ₎O, Value of x | | | | 0.21 | 0.21 | -0.1% |
| ratio of Cordierite to Mullite | | | | 4.6 | 4.9 | 6.8% |

**Table 2**

| | Example 7 | Example 8 | | Example 9 | Example 10 | |
|---|---|---|---|---|---|---|
| | Comparative | Inventive | Difference of Coarse minus Fine | Comparative | Inventive | Difference of Coarse minus Fine |
| As Received or Milled | Coarse | Fine | | Coarse | Fine | |
| Sintering Aid Type | CeO₂ | CeO2 | CeO2 | CeO₂ | CeO2 | CeO2 (1.50%) |
| Sintering Aid Amount, % mass | 1.00% | 1.00% | (1.00%) | 1.50% | 1.50% | |
| Coarse PSD CeO₂ | 1.0 | | | 1.5 | | |
| Fine PSD CeO₂ | | 1.0 | | | 1.5 | |
| Coarse PSD Y₂O₃ | | | | | | |
| Fine PSD Y₂O₃ | | | | | | |

| Inorganics by Mass | | | | | | |
|---|---|---|---|---|---|---|
| Alumina | 41.9 | 41.9 | 0.0 | 41.7 | 41.7 | 0.0 |
| Titania | 33.3 | 33.3 | 0.0 | 33.1 | 33.1 | 0.0 |
| Talc | 20.8 | 20.8 | 0.0 | 20.7 | 20.7 | 0.0 |
| Silica | 3.0 | 3.0 | 0.0 | 3.0 | 3.0 | 0.0 |

| Moles of Inorganic in 100 grams | | | | | | |
|---|---|---|---|---|---|---|
| Al₂O₃ | 0.4111 | 0.4111 | 0.0000 | 0.4091 | 0.4091 | 0.0000 |
| TiO₂ | 0.2603 | 0.2603 | 0.0000 | 0.2591 | 0.2591 | 0.0000 |
| Mg₃Si₄O₁₀(OH)₂ | 0.0549 | 0.0549 | 0.0000 | 0.0547 | 0.0547 | 0.0000 |
| SiO₂ | 0.0343 | 0.0343 | 0.0000 | 0.0341 | 0.0341 | 0.0000 |
| CeO₂ | 0.0056 | 0.0056 | 0.0000 | 0.0085 | 0.0085 | 0.0000 |
| Y₂O₃ | 0.0000 | 0.0000 | 0.0000 | 0.0000 | 0.0000 | 0.0000 |

| Moles of Elemental Oxides | | | | | | |
|---|---|---|---|---|---|---|
| Al₂O₃ | 0.4111 | 0.4111 | 0.0000 | 0.4091 | 0.4091 | 0.0000 |
| TiO₂ | 0.2603 | 0.2603 | 0.0000 | 0.2591 | 0.2591 | 0.0000 |
| SiO₂ | 0.2541 | 0.2541 | 0.0000 | 0.2528 | 0.2528 | 0.0000 |
| MgO | 0.1648 | 0.1648 | 0.0000 | 0.1640 | 0.1640 | 0.0000 |
| CeO₂ | 0.0056 | 0.0056 | 0.0000 | 0.0085 | 0.0085 | 0.0000 |
| Y₂O₃ | 0.0000 | 0.0000 | 0.0000 | 0.0000 | 0.0000 | 0.0000 |

| Moles of Elemental Oxides, %, not including sintering aid | | | | | | |
|---|---|---|---|---|---|---|
| Al₂O₃ | 37.70% | 37.70% | 0.00% | 37.70% | 37.70% | 0.00% |
| TiO₂ | 23.88% | 23.88% | 0.00% | 23.88% | 23.88% | 0.00% |
| SiO₂ | 23.30% | 23.30% | 0.00% | 23.30% | 23.30% | 0.00% |
| MgO | 15.12% | 15.12% | 0.00% | 15.12% | 15.12% | 0.00% |

| Moles of Sintering Aid, Super Addition to Batch | | | | | | |
|---|---|---|---|---|---|---|
| CeO₂ | 0.52% | 0.52% | 0.00% | 0.78% | 0.78% | 0.00% |
| (Y₂O₃)/2 | | | | | | |
| Ratio Sintering Aid to | | | | | | |
| Titania | 0.0217 | 0.0217 | 0.0000 | 0.0327 | 0.0327 | 0.0000 |

| Pore Formers by Mass | | | | | | |
|---|---|---|---|---|---|---|
| Graphite | 10.0 | 10.0 | 0.0 | 10.0 | 10.0 | 0.0 |
| Starch | 28.0 | 28.0 | 0.0 | 28.0 | 28.0 | 0.0 |

| Extrusion Aids and Binders by Mass | | | | | | |
|---|---|---|---|---|---|---|
| Fatty Acid | 1.38 | 1.38 | 0.00 | 1.38 | 1.38 | 0.00 |
| Binder: F240 | 2.07 | 2.07 | 0.00 | 2.07 | 2.07 | 0.00 |
| Binder: TY11A | 4.14 | 4.14 | 0.00 | 4.14 | 4.14 | 0.00 |

| Physical Properties - average of all firings | | | | | | |
|---|---|---|---|---|---|---|
| CTE, RT to 800°C, 10⁻⁷/°C | 11.1 | 10.3 | -7.2% | 9.8 | 9.1 | -7.6% |
| Porosity, % | 60.9 | 60.5 | -0.6% | 59.7 | 59.5 | -0.2% |
| d₁₀, µm | 14.6 | 14.5 | -0.9% | 16.0 | 15.9 | -0.3% |
| Median Pore Diameter, µm | 17.9 | 17.6 | -1.6% | 19.3 | 19.2 | -0.2% |
| d₉₀, µm | 22.1 | 21.4 | -2.9% | 24.0 | 23.8 | -0.8% |

| Crystal Phases | | | | | | |
|---|---|---|---|---|---|---|
| pseudobrookite | 60.8 | 60.5 | -0.5% | 60.3 | 60.0 | -0.5% |
| cordierite | 27.5 | 28.0 | 1.6% | 27.7 | 28.1 | 1.4% |
| mullite | 6.2 | 5.9 | -5.8% | 6.5 | 6.3 | -2.8% |
| corundum | 3.5 | 3.7 | 4.8% | 3.3 | 3.3 | 1.2% |
| rutile | 0.8 | 0.8 | 8.3% | 0.6 | 0.7 | 5.6% |
| CeTi₂O₆ | 1.1 | 1.1 | -1.4% | 1.6 | 1.7 | 2.6% |
| Al₂₍₁₋ₓ₎MgₓTi₍₁₊ₓ₎O, Value of x | 0.21 | 0.21 | 0.5% | 0.20 | 0.20 | 0.0% |
| ratio of Cordierite to Mullite | 4.4 | 4.8 | 7.9% | 4.3 | 4.5 | 4.4% |

Example 3, a Comparative Example (Coarse, As Received), had 0.32 wt% of rare earth oxide (Y₂O₃) with D₅₀ of about 5.7 µm and Example 4, an Exemplary Example (Fine, Milled), had 0.32 wt% of rare earth oxide (Y₂O₃) with a D₅₀ of 0.52 µm. Example 5, a Comparative Example, had 0.5 wt% of rare earth oxide (CeO₂) with D₅₀ of about 5.8 µm and the Example 6, an Exemplary Example, had 0.5 wt% of rare earth oxide (CeO₂) with D₅₀ of 0.33 µm. Comparative Examples 7 and 8 had 1.0 and 1.5 wt% of rare earth oxide (CeO₂), respectively, with D₅₀ of about 5.8 µm. Inventive Examples 9 and 10 had 1.0 and 1.5 wt% of rare earth oxide (CeO₂), respectively, with D₅₀ of about 0.33 µm. The data in Tables 2 and 3 indicates a significant advantage in CTE_{RT-800} for the compositions comprising the fine rare earth oxide according to the exemplary embodiments of the disclosure. The CTE_{RT-800} of the Exemplary Examples was about 7% lower than the Comparative Examples. The CTE_{RT-800} was lower for the Exemplary Examples even when normalized for porosity and moles of rare earth oxide sintering aid.

Modulus of rupture was measured at room temperature on 7.62-cm (3-inch) long rods using the four-point method with a 1.905-cm (0.75-inch) load span and a 5.08-cm (2.0-inch) support span. Young's elastic modulus (Emod) values of certain examples were measured at room temperature using a sonic resonance technique. The weight percentages of all crystalline phases in the fired ceramics were determined by powder x-ray diffractometry and applying a Rietveld analysis to the data. Selected samples were also examined by scanning electron microscopy, and the compositions of the pseudobrookite, cordierite, and mullite phases determined directly by electron probe microanalysis.

Table 3 below provides composition and properties for Comparative and Exemplary precursor batch compositions for composite aluminum titanate-magnesium dititanate, cordierite and mullite bodies as described herein made using the coarse median particle size rare earth oxide (Comparative) and the fine median particle size rare earth oxide (Exemplary). The rare earth oxide is referred to as a sintering aid.

**Table 3**

| | Example 1 | Example 2 | |
|---|---|---|---|
| | Comparative | Exemplary | |
| Sintering Aid Type | CeO₂ | CeO₂ | |
| As Received or Milled | Coarse | Fine | |
| Sintering Aid Amount, % mass | 1.50% | 1.00% | difference |
| Coarse PSD CeO₂ | 1.5 | | |
| Fine PSD CeO₂ | | 1.0 | |

| Inorganics by Mass | | | |
|---|---|---|---|
| Alumina | 41.7 | 41.9 | 0.5% |
| Titania | 33.1 | 33.3 | 0.5% |
| Talc | 20.7 | 20.8 | 0.5% |
| Silica | 3.0 | 3.0 | 0.5% |

| Moles of Inorganic in 100 grams | | | |
|---|---|---|---|
| Al₂O₃ | 40.91 | 41.11 | 0.5% |
| TiO₂ | 25.91 | 26.03 | 0.5% |
| Mg₃Si₄O₁₀(OH)₂ | 5.47 | 5.49 | 0.5% |
| SiO₂ | 3.41 | 3.43 | 0.5% |
| CeO₂ | 0.85 | 0.56 | -33.3% |

| Moles of Elemental Oxides | | | |
|---|---|---|---|
| Al₂O₃ | 40.91 | 41.11 | 0.5% |
| TiO₂ | 25.91 | 26.031 | 0.5% |
| SiO₂ | 25.28 | 25.41 | 0.5% |
| MgO | 16.40 | 16.48 | 0.5% |
| CeO₂ | 0.8460 | 0.5640 | -33.3% |

| Moles of Elemental Oxides, %, not including sintering aid | | | |
|---|---|---|---|
| Al₂O₃ | 37.70% | 37.70% | 0.0% |
| TiO₂ | 23.88% | 23.88% | 0.0% |
| SiO₂ | 23.30% | 23.30% | 0.0% |
| MgO | 15.12% | 15.12% | 0.0% |

| Moles of Sintering Aid, Super Addition to Batch | | | |
|---|---|---|---|
| CeO₂ | 0.78% | 0.52% | -33.7% |
| Ratio Sintering Aid to Titania | 0.0327 | 0.0217 | -33.7% |
| Pore Formers by Mass | | | |
| Graphite | 10.0 | 10.0 | 0.0% |
| Starch | 28.0 | 28.0 | 0.0% |
| Extrusion Aids and Binders by Mass | | | |
| Fatty Acid | 1.38 | 1.38 | 0.0% |
| Methylcellulose Binder: | 6.21 | 6.21 | 0.0% |

| Physical Properties - average of firings | | | |
|---|---|---|---|
| cells, psi | 350 | 350 | 0.0% |
| web thickness, mils | 12 | 12 | 0.0% |
| CTE, RT to 800°C, 10⁻⁷/°C | 10.2 | 10.5 | 2.7% |
| Porosity, % | 59.0 | 58.5 | -0.8% |
| Median Pore Diameter, µm | 18.8 | 18.3 | -2.4% |
| MOR, psi | 168 | 184 | 9.1% |
| EMod, psi × 10⁵ | 1.73 | 1.84 | 5.9% |
| Temp Range of Acceptable Shrink Sensitivity Factor and Properties, fired for 22h | 1348-1356 | 1359-1366 | similar range, but with less ceria |
| Temp Range of Acceptable Shrink Sensitivity Factor and Properties, fired for 16h | 1348-1355 | 1350-1361 | |

| Physical Properties, Calculated from Above | | | |
|---|---|---|---|
| Closed Frontal Area (CFA) | 39.9% | 39.9% | 0.0% |
| CTE/porosity | 0.173 | 0.179 | 3.5% |
| strain tolerance | 0.0971% | 0.1000% | 3.0% |
| MOR/solid fraction | 411 | 443 | 7.9% |

Example 1 was a Comparative Example (Coarse, As Received) having 1.5 wt% of rare earth oxide (CeO₂) with D₅₀ of about 5.8 µm and Example 2 was an Exemplary Example (Fine, Milled) having 1.0 wt% of rare earth oxide (CeO₂) with D₅₀ of 0.33 µm. The data in Table 3 indicates there was little difference in the CTE_{RT-800}, porosity, and median pore diameter (MPD), d₅₀, between the Comparative Example and the Exemplary Example despite 33.3% less rare earth oxide in the Exemplary Example. The modulus of rupture (MOR) in pounds per square inch (psi) reported in Table 3 indicates a significant increase in MOR of the Exemplary Example over the Comparative Example. The elastic modulus (EMod) in psi × 10⁵ indicates moderate increase in Emod for the Exemplary Example, which also had better firing shrink sensitivity. The ratio of MOR/solid fraction indicates the Exemplary Example had a higher MOR normalized to porosity.

**FIG. 6** is a graph showing measurement data for coefficient of thermal expansion (CTE) from Room Temperature (RT) of about 24°C to about 800°C in ppm/K (RT to 800°C) vs. temperature at top soak (T_{ATS}) (°C) for manufactured articles containing 1.5 wt% coarse ceria (cerium oxide) and 1 wt% fine ceria (cerium oxide) according to exemplary embodiments of the disclosure. The eTE_{RT-800} as a function of top soak temperature was similar for the articles comprising 1 wt% fine ceria and for the articles comprising 1.5 wt% coarse ceria. In other words, the performance of articles comprising 1.5 wt% coarse ceria is similar to the performance of articles comprising 1 wt% fine ceria, but the raw material cost was less for the articles comprising 1 wt% fine ceria. **FIG. 6** also shows that for the same amount of ceria, the articles comprising the fine ceria had lower eTE_{RT-800} across the variation in top soak temperatures than articles comprising the coarse ceria.

**FIG. 7A** is a graph showing measurement data for mean eTE_{RT-800} (10⁻⁷/°C) vs. temperature at top soak (T_{ATS}) (°C) for 22 h top soak time at the T_{ATS} for manufactured articles containing various amounts of milled ceria or yttria ("milled", referred to herein as "fine"), the ceria having a median particle size of about 0.4 µm, the yttria having a median particle size of about 0.5 µm according to exemplary embodiments of the disclosure, and unmilled rare earth oxide ("not"), having a median particle size of about 5-10 µm (referred to herein as "coarse") ceria or yttria (yttrium oxide) according to comparative examples. **FIG. 7B** is a graph showing measurement data for mean eTE_{RT-800} (10⁻⁷/°C) vs. T_{ATS} (°C) for 16 h top soak time at the T_{ATS} for manufactured articles containing various amounts of milled ceria or yttria ("milled", referred to herein as "fine"), the ceria having a median particle size of about 0.4 µm, the yttria having a median particle size of about 0.5 µm according to exemplary embodiments of the disclosure, and unmilled rare earth oxide ("not"), having a median particle size of about 5-10 µm ceria or yttria according to comparative examples. **FIG. 7C** is a graph showing measurement data for mean CTE_{RT-800} (10⁻⁷/°C) vs. T_{ATS} (°C) for 10 h top soak time at the T_{ATS} for manufactured articles containing various amounts of milled ceria or yttria ("milled", referred to herein as "fine"), the ceria having a median particle size of about 0.4 µm, the yttria having a median particle size of about 0.5 µm according to exemplary embodiments of the disclosure, and unmilled rare earth oxide ("not"), having a median particle size of about 5-10 µm ceria or yttria according to comparative examples.

**FIGS. 7A****,** **7B, and 7C** demonstrate that for articles comprising the fine rare earth oxide, the CTE_{RT-800} is lowered compared to articles comprising the coarse rare earth oxide at these top soak temperatures and top soak times. Likewise, for articles comprising relatively less of the fine rare earth oxide the CTE_{RT-800} is comparable to articles comprising relatively more of the coarse rare earth oxide at these top soak temperatures and top soak times.

**FIG. 8A** is a graph fit to experimental data showing dry green to fired shrinkage (Pred G-F) with respect to T_{ATS} for manufactured articles containing 1 wt% fine ceria (solid and dashed lower curves) with time at T_{ATS} of 22 hours (h) (dashed line) or 16 h (solid line) according to exemplary embodiments of the disclosure, and manufactured articles containing 1.5 wt% coarse ceria (solid and dashed upper curves) with time at T_{ATS} of 22 h (dashed line) or 16 h (solid line) according to comparative examples.

**FIG. 8B** is a graph of the derivatives of the shrink curves (Der G-F) of **FIG. 8A****,** which shows how sensitive the materials are with respect to top soak temperature (T_{ATS}). In order to control shrinkage using top soak adjustment, the material (dry green to post fired) should have a percent shrinkage per change in top soak temperature (firing shrink sensitivity) of >0.01%/°C, for example 0.03%/°C. Having a sensitivity >0.05%/°C leads to ware that would be too small or too big in a kiln that controls to temperature differentials of up to 10°C.

**FIG. 9A** is a chart showing properties and sensitivities to soak time (h) and T_{ATS} for manufactured articles containing 1 wt% fine ceria according to exemplary embodiments of the disclosure where R1 represents a region of the median pore size limit (>16.5 µm), R2 represents a region of limits for CTE (<11.5 × 10⁻⁷ /°C from RT to 800°C), R3 represents a region of the firing window, and R4 represents a region of the limit for the firing shrink sensitivity (max=0.05%/°C). Boundary lines for CTE_{RT-800} of 12, 11.5. 10.5 and 10 (x 10⁻⁷ /°C) are labeled across the top of the chart. Boundary lines for firing shrink sensitivity of 0.02, 0.04, 0.06, 0.08, and 0.1 % per °C are also labeled across the top of the chart. Boundary lines for pore size are indicated at 16.5, 17, 18, 18.5 and 19 µm. The pore size boundary lines are labeled across the bottom of the chart as 16.5, 17, 18, and 18.5 µm, and at the top of the chart as 19 µm.

**FIG. 9B** is a chart showing properties and sensitivities to soak time (h) and T_{ATS} for manufactured articles containing 1.5 wt% coarse ceria according to comparative examples. R1 represents a region of the median pore size limit (>16.5 µm), R2 represents a region of limits for CTE (<11.5 × 10⁻⁷ /°C from RT to 800°C), R3 represents a region of the firing window, and R4 represents a region of the limit for the firing shrink sensitivity (max=0.05%/°C). Boundary lines for CTE_{RT-800} of 11.5. 10.5 and 10 (x 10⁻⁷ /°C) are labeled from the bottom left to the upper right across the top of the chart. Boundary lines for firing shrink sensitivity of 0.02, 0.03, 0.04, 0.05, 0.06, and 0.07 % per °C are labeled across the bottom of the chart. Boundary lines for pore size are indicated at 17, 17.5, and 18 µm from bottom to top along the left side of the chart and at 18.5 and 19 µm at the bottom right of the chart.

**FIG. 10A** is the chart of **FIG. 9A****,** but with contour lines for shrink, and **FIG. 10B** is the chart of **FIG. 9B****,** but with contour lines for shrink. It can be seen that while the time/temperature window is larger for manufactured articles containing 1.5 wt% coarse ceria, the shrink window is smaller than for the manufactured articles containing 1 wt% fine ceria according to exemplary embodiments of the disclosure. The shrink window for the 1 wt% fine ceria articles according to exemplary embodiments of the disclosure ranges from 1.75% to 2.25% (0.45% range), while the 1.5 wt% coarse ceria articles have a range of 1.6% to 1.9% (0.3% range). Below about 1345°C, the aluminum titanate (AT) phase does not fully form. Thus, more shrink control is provided by the article comprising the 1 wt% fine ceria than the article comprising the 1.5 wt% coarse ceria according to exemplary embodiments of the disclosure.

Ceria and yttria are a few examples of materials that can be used as sintering aids when making aluminum titanate. It has been found that when these materials are milled to finer particle size **(****FIGS. 4 and 5****),** desirable properties, such as lower CTE, can be achieved. **FIGS. 6, 7A****,** **7B, and 7C** show the reduction in CTE_{RT-800} with reduction in rare earth oxide particle size. In addition, the firing window for shrink control is increased by the finer rare earth oxide according to exemplary embodiments of the disclosure, as can be seen in **FIGS. 10A** **and** **10B** where acceptable properties and firing conditions have a 0.3% shrink window for bodies comprising the as received (coarse) ceria at 1.5 wt% and a 0.45% shrink window for bodies comprising the milled (fine) ceria at 1 wt%. Surprisingly, for compositions according to exemplary embodiments of the disclosure the final size of the product can be varied over a wider range than is possible with the comparative example by changing the soak temperature while maintaining the desired properties (e.g., CTE, porosity, pore size, firing shrink sensitivity, etc.).

According to exemplary embodiments of the disclosure, fine rare earth oxide (yttria or a fine lanthanide, in particular, fine ceria) provide a lower coefficient of thermal expansion, and higher thermal shock resistance, than can be achieved with equivalent amounts of coarse rare earth oxide (yttria or lanthanide oxide), thereby enabling a substantial reduction in the amount of rare earth oxide raw material required to achieve a given CTE_{RT-800}, and a reduction in the cost of the raw material ingredients to make the ceramic body.

It will be apparent to those skilled in the art that various modifications and variations can be made in the present disclosure without departing from the scope of the disclosure. Thus, it is intended that the appended claims cover the modifications and variations of this disclosure provided they come within the scope of the appended claims.

## Claims

1. A method of manufacturing a ceramic article, comprising:
mixing at least a magnesia source, a silica source, an alumina source, a titania source, and a rare earth oxide to form an inorganic batch composition,
wherein the rare earth oxide comprises at least one of a lanthanide oxide and yttrium oxide; and
wherein the rare earth oxide comprises a particle size distribution where 90% of the particles in the particle size distribution comprise a size less than or equal to 5 µm (D₉₀ ≤ 5 µm) and a median particle size of less than or equal to 0.7 µm (D₅₀ ≤ 0.7 µm);
mixing the inorganic batch composition together with one or more processing aids selected from the group consisting of a plasticizer, lubricant, binder, pore former, and solvent, to form a plasticized ceramic precursor batch composition;
shaping the plasticized ceramic precursor batch composition into a green body; and
firing the green body under conditions effective to convert the green body into a ceramic article comprising a pseudobrookite phase comprising predominately alumina, magnesia, and titania, a second phase comprising cordierite, and a third phase comprising mullite.

2. The method of claim 1, wherein the rare earth oxide comprises a D₉₀ ≤ 3 µm.

3. The method of any one of claims 1-2, wherein the rare earth oxide comprises a D₉₀ ≤ 3 µm and a D₅₀ ≤ 0.4 µm.

4. The method of any one of claims 1-2, wherein the rare earth oxide comprises a D₅₀ ≤ 1 µm.

5. The method of any one of claims 1-4, wherein the lanthanide oxide comprises cerium oxide.

6. The method of any one of claims 1-5, wherein the rare earth oxide is present, on a weight percent oxide basis, in an amount in the range of from greater than 0.1 to 5 weight% relative to the total weight of the inorganic batch composition.

7. The method of any one of claims 1-6, wherein the plasticized ceramic precursor batch composition is shaped by extrusion.

8. The method of any one of claims 1-7, wherein the firing conditions effective to convert the green body into a ceramic article comprise heating the green body at a maximum soak temperature in the range of 1250°C to 1450°C and maintaining the maximum soak temperature for a time sufficient to convert the green body into a ceramic article.

9. The method of claim 8, wherein the coefficient of thermal expansion (CTE) of the ceramic article changes from 9.5 × 10⁻⁷/°C to less than 7.5 × 10⁻⁷/°C when the maximum soak temperature in the range of 1250°C to 1450°C increases by 20 °C.

10. The method of any one of claims 8-9, wherein a firing shrink sensitivity is greater than 0.01%/°C for the maximum soak temperature in the range of 1250°C to 1450°C.

11. The method of any one of claims 8-10, wherein a firing shrink sensitivity is less than 0.05%/°C for the maximum soak temperature in the range of 1250°C to 1450°C.

12. A ceramic precursor batch composition, comprising:
an inorganic batch composition comprising a magnesia source, a silica source, an alumina source, a titania source, and a rare earth oxide, wherein the rare earth oxide comprises at least one of a lanthanide oxide and yttrium oxide, wherein the rare earth oxide comprises a particle size distribution where 90% of the particles in the particle size distribution comprise a size less than or equal to 5 µm (D₉₀ ≤ 5 µm) and a median particle size of less than or equal to 0.7 µm (D₅₀ ≤ 0.7 µm).

13. The batch composition of claim 12, wherein the rare earth oxide comprises a particle size distribution of D₉₀ of less than 5 µm and a median particle size D₅₀ of less than 0.7 µm.

14. The batch composition of either of claims 12-13, wherein the rare earth oxide comprises cerium oxide and at least one of yttrium oxide and lanthanum oxide.

15. A green body comprising the batch composition of any one of claims 12-14.

## Patentansprüche

1. Verfahren zur Herstellung eines Keramikgegenstands, aufweisend:
Mischen wenigstens einer Magnesiumoxidquelle, einer Siliciumdioxidquelle, einer Aluminiumoxidquelle, einer Titanoxidquelle und eines Seltenerdoxids, um eine anorganische Batch-Zusammensetzung zu bilden,
wobei das Seltenerdoxid wenigstens eines von einem Lanthanidoxid und Yttriumoxid aufweist; und
wobei das Seltenerdoxid eine Partikelgrößenverteilung, bei der 90 % der Partikel der Partikelgrößenverteilung eine Größe von kleiner als oder gleich 5 µm aufweisen (D₉₀ ≤ 5 µm), und eine mediane Partikelgröße von kleiner als oder gleich 0,7 µm (D₅₀ ≤ 0,7 µm) aufweist;
Mischen der anorganischen Batch-Zusammensetzung mit einem oder mehreren Verarbeitungshilfsmitteln ausgewählt aus der Gruppe bestehend aus einem Weichmacher, Schmiermittel, Bindemittel, Porenbildner und Lösungsmittel, um eine weichgemachte keramische Vorläufer-Batch-Zusammensetzung zu bilden;
Formen der weichgemachten keramischen Vorläufer-Batch-Zusammensetzung zu einem Grünkörper; und
Brennen des Grünkörpers unter Bedingungen, die wirkungsvoll sind, den Grünkörper in einen Keramikgegenstand umzuwandeln, der eine Pseudobrookit-Phase, die vorwiegend Aluminiumoxid, Magnesiumoxid und Titanoxid aufweist, eine zweite Phase, die Cordierit aufweist, und eine dritte Phase, Mullit aufweist, aufweist.

2. Verfahren gemäß Anspruch 1, wobei das Seltenerdoxid einen D₉₀ ≤ 3 µm aufweist.

3. Verfahren gemäß einem der Ansprüche 1-2, wobei das Seltenerdoxid einen D₉₀ ≤ 3 µm und einen D₅₀ ≤ 0,4 µm aufweist.

4. Verfahren gemäß einem der Ansprüche 1-2, wobei das Seltenerdoxid einen D₉₀ ≤ 1 µm aufweist.

5. Verfahren gemäß einem der Ansprüche 1-4, wobei das Lanthanidoxid Ceroxid aufweist.

6. Verfahren gemäß einem der Ansprüche 1-5, wobei das Seltenerdoxid, ausgedrückt in Gewichtsprozent auf Oxidbasis, in einer Menge in dem Bereich von mehr als 0,1 bis 5 Gew.-%, bezogen auf das Gesamtgewicht der anorganischen Batch-Zusammensetzung, vorhanden ist.

7. Verfahren gemäß einem der Ansprüche 1-6, wobei die weichgemachte keramische Vorläufer-Batch-Zusammensetzung durch Extrusion geformt wird.

8. Verfahren gemäß einem der Ansprüche 1-7, wobei die Brennbedingungen, die wirkungsvoll sind, den Grünkörper in einen Keramikgegenstand umzuwandeln, Erhitzen des Grünkörpers auf eine höchste Glühtemperatur in dem Bereich von 1250 °C bis 1450 °C und Halten der höchsten Glühtemperatur für eine ausreichende Zeit, um den Grünkörper in einen Keramikgegenstand umzuwandeln, aufweisen.

9. Verfahren gemäß Anspruch 8, wobei sich der Wärmeausdehnungskoeffizient (CTE) des Keramikgegenstands von 9,5 × 10⁻⁷/°C auf kleiner als 7,5 × 10⁻⁷/°C verändert, wenn die höchste Glühtemperatur in dem Bereich von 1250 °C bis 1450 °C um 20 °C zunimmt.

10. Verfahren gemäß einem der Ansprüche 8-9, wobei eine Sensibilität der Brennschrumpfung größer als 0,01 %/°C für die höchste Glühtemperatur in dem Bereich von 1250 °C bis 1450 °C ist.

11. Verfahren gemäß einem der Ansprüche 8-10, wobei eine Sensibilität der Brennschrumpfung kleiner als 0,05 %/°C für die höchste Glühtemperatur in dem Bereich von 1250 °C bis 1450 °C ist.

12. Keramikvorläufer-Batch-Zusammensetzung, aufweisend:
eine anorganische Batch-Zusammensetzung, die eine Magnesiumoxidquelle, eine Siliciumdioxidquelle, eine Aluminiumoxidquelle, eine Titanoxidquelle und ein Seltenerdoxid aufweist, wobei das Seltenerdoxid wenigstens eines von einem Lanthanidoxid und Yttriumoxid aufweist, wobei das Seltenerdoxid eine Partikelgrößenverteilung, bei der 90 % der Partikel der Partikelgrößenverteilung eine Größe von kleiner als oder gleich 5 µm aufweisen (D₉₀ ≤ 5 µm), und eine mediane Partikelgröße von kleiner als oder gleich 0,7 µm (D₅₀ ≤ 0,7 µm) aufweist.

13. Batch-Zusammensetzung gemäß Anspruch 12, wobei das Seltenerdoxid eine Partikelgrößenverteilung mit D₉₀ von kleiner als 5 µm und eine mediane Partikelgröße D₅₀ von kleiner als 0,7 µm aufweist.

14. Batch-Zusammensetzung gemäß einem der Ansprüche 12-13, wobei das Seltenerdoxid Ceroxid und wenigstens eines von Yttriumoxid und Lanthanoxid aufweist.

15. Grünkörper, aufweisend die Batch-Zusammensetzung gemäß einem der Ansprüche 12-14.

## Revendications

1. Procédé de fabrication d'un article de céramique, comprenant :
le mélange d'au moins une source de magnésie, une source de silice, une source d'alumine, une source d'oxyde de titane, et un oxyde de terres rares pour former une composition de lot inorganique,
l'oxyde de terres rares comprenant au moins l'un parmi un oxyde de lanthanide et l'oxyde d'yttrium ; et
l'oxyde de terres rares comprenant une distribution de tailles de particules où 90 % des particules dans la distribution de tailles de particules comprennent une taille inférieure ou égale à 5 µm (D₉₀ ≤ 5 µm) et une taille médiane de particule inférieure ou égale à 0,7 µm (D₅₀ ≤ 0,7 µm) ;
le mélange de la composition de lot inorganique ensemble avec un ou plusieurs auxiliaires de traitement choisis dans le groupe constitué par un plastifiant, un lubrifiant, un liant, un agent porogène, et un solvant, pour former une composition de lot de précurseur de céramique plastifié ;
le façonnement de la composition de lot de précurseur de céramique plastifié en un corps vert ; et
la cuisson du corps vert dans des conditions efficaces pour convertir le corps vert en un article de céramique comprenant une phase de pseudobrookite comprenant de manière prédominante de l'alumine, de la magnésie et de l'oxyde de titane, et une deuxième phase comprenant de la cordiérite, et une troisième phase comprenant de la mullite.

2. Procédé selon la revendication 1, l'oxyde de terres rares comprenant un D₉₀ ≤ 3 µm.

3. Procédé selon l'une quelconque des revendications 1 et 2, l'oxyde de terres rares comprenant un D₉₀ ≤ 3 µm et un D₅₀ ≤ 0,4 µm.

4. Procédé selon l'une quelconque des revendications 1 et 2, l'oxyde de terres rares comprenant un D₉₀ ≤ 1 µm.

5. Procédé selon l'une quelconque des revendications 1 à 4, l'oxyde de lanthanide comprenant de l'oxyde de cérium.

6. Procédé selon l'une quelconque des revendications 1 à 5, l'oxyde de terres rares étant présent, sur une base d'oxydes en pour cent en poids, en une quantité dans la plage allant de plus de 0,1 à 5 % en poids par rapport au poids total de la composition de lot inorganique.

7. Procédé selon l'une quelconque des revendications 1 à 6, la composition de lot de précurseur de céramique plastifié étant façonnée par extrusion.

8. Procédé selon l'une quelconque des revendications 1 à 7, les conditions de cuisson efficaces pour convertir le corps vert en un article de céramique comprenant le chauffage du corps vert à une température maximale de trempage dans la plage de 1 250 °C à 1 450 °C et le maintien de la température maximale de trempage pendant une durée suffisante pour convertir le corps vert en un article de céramique.

9. Procédé selon la revendication 8, le coefficient d'expansion thermique (CTE) de l'article de céramique changeant de 9,5 × 10⁻⁷/°C à moins de 7,5 × 10⁻⁷/°C lorsque la température maximale de trempage dans la plage de 1 250 °C à 1 450 °C augmente de 20 °C.

10. Procédé selon l'une quelconque des revendications 8 et 9, une sensibilité au rétrécissement par cuisson étant supérieure à 0,01 %/°C pour la température maximale de trempage dans la plage de 1 250 °C à 1 450 °C.

11. Procédé selon l'une quelconque des revendications 8 à 10, une sensibilité au rétrécissement par cuisson étant inférieure à 0,05 %/°C pour la température maximale de trempage dans la plage de 1 250 °C à 1 450 °C.

12. Composition de lot de précurseur de céramique, comprenant :
une composition de lot inorganique comprenant une source de magnésie, une source de silice, une source d'alumine, une source d'oxyde de titane, et un oxyde de terres rares, l'oxyde de terres rares comprenant au moins l'un parmi un oxyde de lanthanide et l'oxyde d'yttrium, l'oxyde de terres rares comprenant une distribution de tailles de particules où 90 % des particules dans la distribution de tailles de particules comprennent une taille inférieure ou égale à 5 µm (D₉₀ ≤ 5 µm) et une taille médiane de particule inférieure ou égale à 0,7 µm (D₅₀ ≤ 0,7 µm).

13. Composition de lot selon la revendication 12, l'oxyde de terres rares comprenant une distribution de tailles de particules de D₉₀ de moins de 5 µm et une taille médiane de particule D₅₀ de moins de 0,7 µm.

14. Composition de lot selon l'une ou l'autre des revendications 12 et 13, l'oxyde de terres rares comprenant de l'oxyde de cérium et au moins l'un parmi l'oxyde d'yttrium et l'oxyde de lanthane.

15. Corps vert comprenant la composition de lot selon l'une quelconque des revendications 12 à 14.
